(19) Europäisches Patentamt
European Patent Office
Office européen des brevets

(11) EP 1 424 893 B1

# (12) FASCICULE DE BREVET EUROPEEN

(45) Date de publication et mention de la délivrance du brevet:
**19.04.2006 Bulletin 2006/16**

(21) Numéro de dépôt: **02777410.8**

(22) Date de dépôt: **09.09.2002**

(51) Int Cl.:
***A01N 37/52*** *(2006.01)*

(86) Numéro de dépôt international:
**PCT/FR2002/003049**

(87) Numéro de publication internationale:
**WO 2003/024219 (27.03.2003 Gazette 2003/13)**

## (54) MELANGE FONGICIDE CONTENANT DES DERIVES D'ARYLAMIDINE

FUNGIZIDE MISCHUNG, DIE ARYLAMIDINDERIVATE ENTHÄLT

FUNGICIDAL MIXTURE CONTAINING ARYLAMIDINE DERIVATIVES

(84) Etats contractants désignés:
**AT BE BG CH CY CZ DE DK EE ES FI FR GB GR IE IT LI LU MC NL PT SE SK TR**

(30) Priorité: **10.09.2001 FR 0111685**

(43) Date de publication de la demande:
**09.06.2004 Bulletin 2004/24**

(73) Titulaire: **Bayer CropScience S.A.**
**69009 Lyon (FR)**

(72) Inventeurs:
- **LABOURDETTE, Gilbert**
  **F-71600 Paray le Monial (FR)**
- **ZUNDEL, Jean-Luc**
  **F-69006 Lyon (FR)**
- **LAPPARTIENT, Anne-Gabrielle**
  **F-69004 Lyon (FR)**
- **VILLIER, Alain**
  **F-69450 Saint Cyr au Mont d'Or (FR)**
- **O'NEILL, Elizabeth**
  **F-69300 Caluire (FR)**
- **VORS, Jean-Pierre**
  **F-69009 Lyon (FR)**
- **GROSJEAN-COURNOYER, Marie-C.,**
  **Le Trève Collonge**
  **F-69250 Curis au Mont d'Or (FR)**

(74) Mandataire: **Nowak, Alexander**
**Bayer CropScience S.A.**
**Département Brevets et Licences**
**14-20, rue Pierre Baizet**
**B.P. 9163**
**69263 Lyon Cedex 09 (FR)**

(56) Documents cités:
**WO-A-00/46184**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 424 893 B1

## Description

La présente invention concerne des combinaisons de composés fongicides destinées notamment à la protection des cultures contre les maladies fongiques, ainsi que les procédés correspondants de protection par application desdites combinaisons.

Plus précisément, la présente invention a pour objet de nouvelles compositions fongicides à base de dérivés de $N_2$-phénylamidine et d'au moins un autre agent anti-fongique.

En matière d'activité fongicide, notamment pour la protection des cultures, l'un des problèmes au coeur des recherches menées dans ce domaine technique est l'amélioration des performances, en particulier en terme d'activité fongicide et surtout en terme de maintien de cette activité fongicide dans le temps.

Naturellement, les composés fongicides utiles pour la protection des végétaux contre les champignons doivent être dotés d'une écotoxicité réduite au minimum. Ils doivent être, autant que faire se peut, ni dangereux, ni toxiques pour l'opérateur lors de l'utilisation.

De plus, il est avantageux que les composés fongicides aient un large spectre d'activité.

Le facteur économique ne doit bien entendu pas être négligé dans la recherche de nouveaux composés fongicides.

Sans que cela ne soit limitatif, on s'intéresse plus particulièrement dans le cadre de l'invention, à la protection contre l'infestation par des champignons, des céréales, de la vigne, des légumes, de la luzerne, du soja, des cultures maraîchères, du gazon, du bois et des plantes horticoles, entre autres.

Les compositions selon l'invention incluent un ou plusieurs dérivés de $N_2$-phénylamidine tels que décrits dans la demande de brevet internationale WO-00/46184.

Ces composés sont noyés au sein de la famille définie dans cette demande qui couvre plusieurs milliers de composés et certains font partie de la liste de plus de 700 composés explicitement mentionnés dans le document WO-00/46184. Comme indiqué page 10 lignes 16 à 27, les dérivés $N_2$-phénylamidine de formule (I) selon le document WO-00/46184, peuvent être incorporés dans des compositions phytosanitaires avec des supports ou des diluants acceptables en agriculture et éventuellement un ou plusieurs ingrédients actifs, tels que par exemple des composés fongicides. Cette allusion à la mise en oeuvre de fongicides avec les composés $N_2$-phénylamidine de formule (I), a une portée extrêmement générale. Les ingrédients actifs fongicides susceptibles d'être mis en oeuvre avec les composés de formule (I) ne sont nullement décrits explicitement sous forme de composés isolés ou en terme de famille chimique. En particulier, aucune combinaison performante en terme d'activité fongicide pérenne n'est divulguée dans cette demande de brevet internationale.

L'un des objectifs essentiels de la présente invention est de fournir de nouveaux produits fongicides utilisables, notamment par l'agriculteur, pour lutter contre les champignons infestant les cultures et en particulier contre 3 maladies fongiques majeures des céréales à savoir : l'oïdium, la rouille brune et la septoriose.

Un autre objectif essentiel de l'invention est de fournir une nouvelle composition fongicide à base de dérivés de $N_2$-phénylamidine, qui soit beaucoup plus active contre les champignons nuisibles aux végétaux, et surtout active sur de plus longues durées que les agents anti-fongiques connus jusqu'alors.

Un autre objectif essentiel de l'invention est de fournir un nouveau composé fongicide tout à fait performant notamment en ce qui concerne son efficacité contre les champignons et la pérennité de cette efficacité, de manière à pouvoir réduire les doses de produits chimiques épandues dans l'environnement pour lutter contre les attaques fongiques des cultures.

Un autre objectif essentiel de l'invention est de fournir une nouvelle composition fongicide plus active et plus longtemps active, donc moins dosée, mais aussi moins toxique.

Un autre objectif essentiel de l'invention est de fournir une nouvelle composition fongicide à large spectre, efficace de manière pérenne et offrant à l'agriculteur un grand nombre de produits, de façon à ce que celui-ci trouve parmi eux le produit le mieux adapté à son usage particulier.

Un autre objectif essentiel de l'invention est de fournir une nouvelle composition fongicide répondant aux spécifications visées dans les objectifs ci-dessus et qui soit également d'un faible coût de revient, facile et non dangereuse à manipuler.

Un autre objectif essentiel de l'invention est de proposer une nouvelle composition fongicide telle que définie dans les objectifs ci-dessus et utile dans le traitement préventif et curatif des maladies fongiques par exemple des céréales, des solanées, de la vigne, des légumes, de la luzerne, du soja, des cultures maraîchères, du gazon, du bois ou des plantes horticoles.

Un autre objectif essentiel de l'invention est de proposer une nouvelle composition fongicide présentant une efficacité améliorée contre les basidomycètes et les ascomycètes.

Un autre objectif essentiel de l'invention est de proposer un traitement préventif et/ou curatif des végétaux et en particulier des cultures, par une mise en oeuvre d'une composition fongicide ou d'une combinaison fongicide faisant intervenir les produits de la composition telle que définie dans les objectifs ci-dessus, un tel traitement se devant d'avoir

une efficacité haute et pérenne contre une très grande variété de champignons, tout en minimisant les doses, la toxicité et le coût.

Un autre objectif essentiel de la présente invention est de fournir un nécessaire de lutte à titre curatif et/ou préventif et/ou éradiquant contre les champignons phytopathogènes des végétaux et en particulier des cultures, qui réponde aux spécifications énoncées dans les objectifs ci-dessus.

Un objectif supplémentaire de la présente invention est de permettre une amélioration du rendement des cultures qui soit significative d'un point de vue agronomique.

Tous ces objectifs, parmi d'autres, ont été atteints par les inventeurs qui ont eu le mérite de trouver une association fongicide entre des dérivés de $N_2$-phénylamidine et un composé fongicide connu, par exemple de type triazole, triazolinone, amidazole, strobilurine ou morpholine ; une telle association présentant de manière surprenante et inattendue une efficacité anti-fongique très importante et pérenne contre un large spectre de champignons et en particulier contre ceux à l'origine des maladies des céréales tels que les basidomycètes ou les ascomycètes.

La présente invention qui satisfait en totalité ou en partie aux susdits objectifs, concerne donc en premier lieu des compositions fongicides comprenant :

A) au moins un dérivé d'arylamidine de formule (I) :

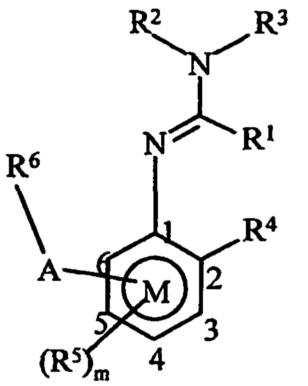

(A)

dans laquelle :

- $R^1$ est un alkyle, un alcényle, un alcynyle, un groupement monovalent carbocyclique ou hétérocyclique, chacun de ces groupements pouvant être substitué, ou l'hydrogène;
- $R^2$ et $R^3$, qui peuvent être identiques ou différents, sont l'un quelconque des groupements défini pour $R^1$; un cyano; un acyle; $-OR^a$ ou $-SR^a$, avec $R^a$ correspondant à un alkyle, un alcényle, un alcynyle, un groupement monovalent carbocyclique ou hétérocyclique, chacun de ces groupements pouvant être substitué, ou $R^2$ et $R^3$, ou $R^2$ et $R^1$ peuvent former ensemble et avec les atomes qui les relient, un cycle pouvant être substitué;
- $R^4$ est un alkyle, un alcényle, un alcynyle, un groupement monovalent carbocyclique ou hétérocyclique, chacun de ces groupements pouvant être substitué, un groupement hydroxyle; mercapto; azido; nitro; halogèno; cyano; acyle éventuellement substitué, amino; cyanato; thiocyanato; $-SF_5$; $-OR^a$; $-SR^a$ ou $-Si(R^a)_3$;
- m = 0 à 3;
- l'éventuel $R^5$ ou les éventuels $R^5$, qui peuvent être identiques ou différents entre eux, répondent à la même définition que celle donnée ci-dessus pour $R^4$;
- $R^6$ est éventuellement substitué par un groupement monovalent carbocyclique; et
- A est une liaison directe, -O-, $-S(O)_n-$, $-NR^9-$, $-CR^7=CR^7-$, -C≡C-, $-A^1-$, $-A^1-A^1$, $-O-(A^1)_k-O-$, $-O-(A^1)_k-$, $-A^3-$, $-A^4-$, $-A^1O-$, $-A^1S(O)_n-$, $-A^2-$, $OA^2-$, $-NR^9A^2-$, $-OA^2-A^1-$, $-OA^2-C(R^7)=C(R^8)-$, $-S(O)_nA^1-$, $-A^1-A^4-$, $-A^1-A^4-C(R^8)=N-N=CR^8-$, $-A^1-A^4-C(R^8)=N-X^2-X^3$, $-A^1-A^4-A^3-$, $-A^1-A^4-N(R^9)-$, $-A^1-A^4-X-CH_2-$, $-A^1-A^4-A^1-$, $-A^1-A^4-CH_2X-$, $-A^1-A^4-C(R^8)=N-X^2-X^3-X^1-$, $-A^1-X-C(R^8)=N-$, $-A^1-X-C(R^8)=N-N=CR^8-$, $-A^1-X-C(R^8)=N-N(R^9)-$, $-A^1-X-A-X^1$, $-A^1-O-A^3-$, $-A^1-O-C(R^7)=C(R^8)-$, $-A^1-O-N(R^9)-A^2-N(R^9)-$, $-A^1-O-N(R^9)-A^2-$, $-A^1-N(R^9)-A^2-N(R^9)-$, $-A^1-N(R^9)-A^2-$, $-A^1-N(R^9)-N=C(R^8)-$, $-A^3-A^1-$, $-A^4-A^3-$, $-A^2-NR^9-$, $-A^1-A^2-X^1$, $-A^1-A^1-A^2-X^1-$, $-O-A^2-N(R^9)-A^2-$, $-CR^7-CR^7-A^2-X^1-$, $-C≡C-A^2-X^1-$, $-N=C(R^8)-A^2-X^1-$, $-C(R^8)=N-N=C(R^8)-$, $-C(R^8)=N N(R^9)-$, $-(CH_2)_2-O-N-C(R^8)-$ ou $-X-A^2-N(R^9)-$
  avec
  n = 0, 1 ou 2,
  k= 1 à 9,

$A^1$ = $-CHR^7-$,
$A^2$ = $-C(=X)-$,
$A^3$ = $-C(R^8)=N-O-$,
$A^4$ = $-O-N=C(R^8)-$,
X = O ouS,
$X^1$ = O, S, $NR^9$ ou une liaison directe,
$X^2$ = O, $NR^9$ ou une liaison directe,
$X^3$ = hydrogène, -C(=O), $-SO_2-$ ou une liaison directe,
$R^7$, identiques ou différents entre eux , correspondent chacun à un alkyle éventuellement substitué, à un cycloalkyle ou un phényle, chacun de ces groupements pouvant être substitué, l'hydrogène, un halogène, un cyano, ou un acyle;
$R^8$, identiques ou différents entre eux , correspondent chacun à un alkyle, un alcényle, un alcynyle, un alcoxy, un alkylthio, chacun de ces groupements pouvant être substitué, un groupement monovalent carbocyclique ou hétérocyclique qui peut être éventuellement substitué, ou l'hydrogène;
$R^9$, identiques ou différents entre eux , correspondent chacun à un alkyle éventuellement substitué, à un groupement monovalent carbocyclique ou hétérocyclique qui peut être éventuellement substitué, ou à un acyle; ou deux groupements $R^9$ peuvent former ensemble et avec les atomes qui les relient, un cycle à 5-7 chaînons;
le groupement représenté sur le coté droit de la liaison A est relié à $R^6$; ou $-A-R^6$ et $R^5$ forment ensemble avec le cycle benzène M, un système de cycles condensés éventuellement substitué(s);
ainsi que les éventuels isomères optiques et/ou géométriques, tautomères et sels d'addition à un acide ou une base, acceptables dans le domaine de l'agriculture, de ces dérivés de formule (I); et leurs mélanges; et

B) au moins un autre composé fongicide connu, de préférence choisi dans le groupe comprenant : les triazoles, les triazolinones, les imidazoles, les strobilurines et les morpholines, leurs éventuels isomères optiques et/ou géométriques, tautomères et sels d'addition à un acide ou une base, acceptables dans le domaine de l'agriculture, et leurs mélanges.

Dans les définitions des composés de formule (I) exposés ci-dessus, les différents radicaux et termes chimiques employés ont, sauf précision contraire, les significations suivantes :

- "alkyle" ou alkyl-" désigne un radical hydrocarboné saturé; linéaire ou ramifié, contenant de 1 à 8 atomes de carbone ;
- "alcényle" désigne un radical hydrocarboné, linéaire ou ramifié, contenant de 1 à 8 atomes de carbone et une insaturation sous forme de double liaison ;
- "alcynyle" désigne un radical hydrocarboné, linéaire ou ramifié, contenant de 1 à 8 atomes de carbone et une insaturation sous forme de triple liaison ;
- "alcoxy" désigne un radical alkyl-oxy ;
- "acyle" désigne le radical formyle ou un radical alcoxycarbonyle ;
- "cycloalkyle" désigne un radical hydrocarboné cyclique saturé, contenant de 3 à 8 atomes de carbone ;
- "aryle" désigne un radical ou plusieurs radicaux aromatiques, de préférence, un phényle ou un naphtyle ;
- "hétérocycle" désigne un radical cyclique, insaturé ou totalement ou partiellement saturé, conteant de 3 à 8 atomes, choisis parmi carbone, azote, soufre et oxygène, par exemple et de manière non limitative, pyridyle, pyridinyle, quinolyle, furyle, thiényle, pyrrolyle, oxazolinyle ;
- le terme "éventuellement substitué" signifie que les radicaux ainsi qualifiés peuvent être substitués par un ou plusieurs radicaux choisis parmi chlore, brome, fluor, iode, alkyle, alcoxy, hydroxy, nitro, amino; cyano et acyle.

Selon un mode préféré de réalisation de l'invention les composés (A) sont de formule (I) dans laquelle :

$R^1$ est un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol par ou un halogène, ou l'hydrogène;
$R^2$ et $R^3$ qui peuvent être identiques ou différents et qui répondent à la même définition que celle donnée ci-dessus pour $R^1$ ou qui correspondant à un alcoxy, un alcoxyalkyle, un benzyloxy, un cyano ou un alkylcarbonyle;
$R^4$ est un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol ou par un halogène; un hydroxyle; un halogène; un cyano; un acyle (de préférence : $-C(=O)R^c$, $-C(=S)R^c$ or $-S(O)_pR^c$, avec $R^c$ correspondant à un alkyle, un haloalkyle, alcoxy, haloalcoxy, alkylthiol, une amine, une monoalkylamine, une dialkylamine ou un phényle éventuellement substitué par un alkyle, par un haloalkyle, par un alcoxy, par un haloalcoxy, ou par un alkylthiol;

m = 0 ou 1;
quand il est présent, $R^5$ est un groupement répondant à la même définition que celle donnée ci-dessus pour $R^4$,
A est une liaison directe, -O-, -S-, -$NR^9$-, -$CHR^7$- ou -O-$CHR^7$-,
avec $R^9$, quand il est présent correspondant à un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol ou par un halogène, ou correspond à l'hydrogène;
et $R^7$ répond à la même définition que celle donnée ci-dessus pour $R^9$ ou représente un hydroxyle; un halogène; un cyano; un acyle; alcoxy; un haloalcoxy ou un alkylthiol;
A est relié à la position 4 du cycle benzène M; et
$R^6$ est un phényle ou un hétérocycle aromatique, éventuellement substitué par un ou plusieurs substituants, identiques ou différents entre eux, et qui peuvent être sélectionné dans la liste suivante: hydroxyle; halogène; cyano; acyle (de préférence -C(=O)$R^c$, -C(=S)$R^c$ ou -$S(O)_pR^c$, avec $R^c$ = alkyle, haloalkyle, alcoxy, haloalcoxy, alkylthiol or phényle éventuellement substitué par un alkyle, haloalkyle, alcoxy, haloalcoxy or alkylthiol); amine; alkylamine; dialkylamine; alkyle, haloalkyle, $R^a$O-alkyle, acyloxyalkyle, cyanooxyalkyle, alcoxy; haloalcoxy; alkylthiol; cycloalkyle (de préférence cyclohexyle or cyclopentyle) éventuellement substitué par un alkyle, un haloalkyle, un alcoxy, un haloalcoxy ou par un alkylthiol; et benzyle éventuellement substitué par un alkyle, un haloalkyle, un alcoxy, un haloalcoxy ou par un alkylthiol.

Les composés (A) de formule (I) encore plus spécialement préférés sont ceux possédant les caractéristiques suivantes, prises isolement ou en combinaison :

$R^1$=H
$R^2$ = alkyle en C1-C6, de préférence méthyle;
$R^3$= alkyle en C1-C6, de préférence éthyle;
$R^4$ = alkyle en C1-C6, de préférence méthyle;
$R^5$ = alkyle en C1-C6, de préférence méthyle et $R^5$ est relié au carbone en C5 du cycle benzyle M, avec m=1;
A est relié au carbone en C4 du cycle benzyle M et représente -O-;
$R^6$ = aryle, de préférence benzyle, avantageusement substitué par au moins un alkyle et/ou par au moins un halogène.

A titre d'exemple, les composés (A) mis en oeuvre au sein de la composition fongicide selon l'invention, sont préférés :

- le *N*-éthyl-*N*-méthyl-*N'*-[4-(chloro-3-trifluorométhylphénoxy)-2,5-xylyl]-formamidine,
- et le *N*-éthyl-*N*-méthyl-*N'*-[4-(fluoro-3-trifluorométhylphénoxy)-2,5-xylyl]-formamidine
- ainsi que les éventuels tautomères et sels d'addition à un acide ou une base, acceptables dans le domaine de l'agriculture, de ces composés (A).

Ces composés (A) particuliers ne font pas partie de ceux testés comme fongicides dans la demande de brevet internationale WO-00/46184.
Les composés (B) associés de manière avantageuse et inventive aux composés (A) définis ci-dessus, sont de préférence ceux sélectionnés dans la liste de fongicides suivante:

l'acétate de phénylmercure ; l'*ampelomyces quisqualis ;* l'ac 382042 ; l'azaconazole ; l'azoxystrobine ; facibenzolar-s-méthyle, le *bacillui subtilis ;* le bénalaxyle ; le bénomyle ; le biphenyle ; le bitertanole ; la blasticidine-s ; la bouillie bordelaise ; le boraxe ; le bromuconazole ; le bupirimate ; le calboxine ; le polysulfure de calcium; le captafole ; le captane ; le carbendazime ; le carboxine, le carpropamide (ktu 3616) ; le cga 279202 ; le chinomethionate ; le chlorothalonile ; le chlozolinate ; les compositions fungicides à base de cuivre ou de dérivés du cuivre telles que l'hydroxyde de cuivre ; le naphthénate de cuivre ; l'oxychlorure de cuivre ; le sulfate de cuivre ; l'oxide cuivreux ; le cymoxanile ; le cyproconazole ; le cyprodinile ; le cyazofamide, le dazomète ; le débacarbe ; le dichlofluanide ; le dichlomezine ; le dichlorophène ; le diclocymète ; le diclorane ; le diéthofencarbe ; le difenoconazole ; le difenzoquate ; le difenzoquate metilsulfate ; le diflumetorime ; le dimethirimole ; le dimethomorphe ; la dimoxystrobine ; le diniconazole ; le diniconazole-m ; le dinobutone ; le dinocape ; la diphnenylamine, la discostrobine, le dithianon ; le dodemorphe ; le dodemorph acétate ; la dodine ; la dodine base libre ; l'edifenphose; l'epoxiconazole (bas 480f); l'éthaboxame ; l'ethasulfocarbe ; l'ethirimole; l'etridiazole ; ; la famoxadone ; la fénamidone; le fénarimole ; le fenbuconazole ; le fenfine ; le fenfurame ; le fenhéxamide ; le fenpiclonile ; le fenpropidine ; le fenpropimorphe ; le fentin acétate ; le fentin hydroxide ; le ferbame ; le ferimzone ; le fluaziname ; le fludioxonile ; le fluoroimide ; le fluquinconazole ; le flusilazole ; le flusulfamide ; le flutolanile ; le flumetover, le flutriafole ; le

folpète ; le formaldéhyde ; le fosétyle ; le fosétyle-aluminium ; le fubéridazole ; le furalaxyle ; le *fusarium oxysporum ;* le furamétpyre ; le sulfate de 8-hydroxyquinoline ; le *gliocladium virens*; le guazatine; le guazatine acétate; le gy-81 ; l'hexachlorobenzène; l'hexaconazole ; l'hymexazole ; l'hydroxyquinoline sulfate de potassium, l'icia0858 ; l'ikf-916 ; l'imazalile; l'imazalile sulfate ; l'imibenconazole ; l'iprobenphos ; l'iminoctadine; l'iminoctadine triacétate ; l'iminoctadine tris [albesilate] ; l'ipconazole ; l'iprobenfose; l'iprodione ; l'iprovalicarbe ; l'isoprothiolane, le kasugamycine ; le kasugamycine hydrochlorure hydrate ; le kresoxime-méthyle ; le mancopper ; le mancozebe ; le manebe ; le méfenoxame ; le mépanipyrime ; le mépronile ; le chlorure mercurique ; l'oxide mercurique ; le chlorure mercureux ; le métalaxyle et ses formes énantiomères, en particulier le métalaxyle-m ; le métame ; le métame-sodium ; le métconazole ; le méthasulfocarbe; l'isothiocyanate de méthyle; le métirame ; métirame-zinc, le métominostrobine (ssf-126) ; le mon65500 ; le myclotbutanile ; le nabame ; l'acide naphthénique ; le naphthénate de zinc ; le natamycine ; le bis (diméthyidithiocarbamate) de nickel ; le nitrothale-isopropyle ; le nuarimole ; l'octhilinone ; l'ofurace ; l'acide oléique (les acides gras) ; l'oxadixyle ; l'oxine-cuivre ; l'oxycarboxine ; le penconazole ; le pencycurone ; le pentachlorophénole ; le laurate de pentachlorophenyle ; le perfurazoate ; le 2-phénylphénole ; le *phlebiopsis gigantea;* l'acide ; phosphorique et ses dérivés tels que le fosetyle-al, le phthalide, la picoxystrobine, le pipéraline ; la polyoxine b ; les polyoxines ; le polyoxorime ; le probenazole ; le prochloraz ; la procymidone ; le propamocarbe ; l'hydrochlorure de propamocarbe hydrochloride ; le propiconazole ; le propinèbe, la pyraclostrobine ; le pyrazophos ; le pyributicarbe ; le pyrifenox ; le pyriméthanile ; le pyroquilone, le quinoxyfène; le quintozène ; le rh-7281 ; la sec-butylamine ; le 2-phénylphenoxide de sodium ; le pentachlorophénoxide de sodium ; le silthiofame, le siméconazole, le spiroxamine (kwg 4168) ; le *streptomyces griseoviridis ;* le soufre ; les huiles de goudron ; le tébuconazole ; le tecnazène ; le tétraconazole ; le thiabendazole ; le thifluzamide ; le thiophanate tel que le thiophanate-méthyle ; le thirame ; le tolclofos-méthyle ; le tolylfluanide ; le triadimefone ; le triadimenole ; la trifloxystrobine ; les triazolopyrimidines, en particulier le cloransulame de méthyle, le flumetsulame, le florasulame, le métosulame, le triazoxide ; le *trichoderma harzianum* ; le tricyclazole ; le tridémorphe ; la trifloxystrobine ; le triflumizole ; le triforine ; le triticonazole ; la validamycine ; les dérivés de valinamide en particulier l'iprovalicarbe et la benthiavalicarbe ; le vinclozoline ; le zinebe ; le zirame ; le zoxamide et leurs mélanges.

Le fluquinconazole et le fenpropimorphe ainsi que leurs éventuels tautomères et sels d'addition à un acide ou une base, acceptables dans le domaine de l'agriculture, sont plus particulièrement préférés; il en est de même pour les composés (B) de la famille des strobilurines.

Pour plus de détails sur ces composés (B) sélectionnés selon l'invention, on se reportera par exemple dans "The Pesticide Manual", 11th édition, C D S Tomlin, British Crop Protection Council, pages 1015-1017, n° 599.

L'association fongicide des composés (A) aux composés (B) selon l'invention, et en particulier le fluquinconazole et le fenpropimorphe, permet d'améliorer significativement la persistance d'activité anti-fongique dans le cadre du traitement curatif et/ou préventif de maladies majeures des céréales tels que l'oïdium, la rouille brune et la septoriose. Cette association a des propriétés éradiquantes supérieures à celles des produits seuls.

Comme cela ressort de ce qui précède, les exemples préférés d'associations fongicides selon l'invention comprendront le composé (A) et le fluquinconazole et/ou le fenpropimorphe, ainsi que leurs éventuels tautomères et d'addition à un acide ou une base, pour autant que ces équivalents soient acceptables dans le domaine de l'agriculture.

Sur le plan prépondéral, il convient de préciser que conformément à l'invention le rapport massique (A/B) se définit comme suit:

$0{,}001 \leq A/B \leq 500$

de préférence $0{,}01 \leq A/B \leq 500$

et plus préférentiellement encore $0{,}01 \leq A/B \leq 10$.

Dans le cas où le composé (B) est le fluquinconazole ou le fenpropimorphe (ou un de leurs équivalents), il a pu être trouvé que le rapport massique (A/B) est avantageusement compris entre 0,05 et 5.

Le rapport composé (A)/composé (B) est défini comme étant le rapport en poids de ces 2 composés. Il en est de même pour tout rapport de 2 composés chimiques, ultérieurement mentionné dans le présent texte, dans la mesure où une définition différente de ce rapport n'est pas expressément indiquée.

Selon un autre aspect de la présente invention, dans les compositions selon l'invention, le rapport composé (A)/composé (B) peut avantageusement choisi de manière à produire un effet synergique. On entend par effet synergique notamment celui défini par Colby, dans un article intitulé "Calcul des réponses synergiques et antagonistes des combinaisons herbicides", *Weeds,* (1967), *15*, pages. 20-22.

Ce dernier article mentionne la formule :

$$E = X + Y - \frac{XY}{100}$$

dans laquelle E représente le pourcentage attendu d'inhibition de la maladie pour l'association des deux fongicides à des doses définies (par exemple égales respectivement à x et y), X est le pourcentage d'inhibition observé de la maladie par le composé (A) à une dose définie (égale à x), Y est le pourcentage d'inhibition observé de la maladie par le composé (B) à une dose définie (égale à y). Lorsque le pourcentage d'inhibition observé de l'association est plus grand que E, il y a effet synergique.

On entend également par effet synergique celui défini par l'application de la méthode de Tammes, "Isoboles, a graphie représentation of synergism in pesticides", *Netherlands Journal of Plant Pathology, 70*(1964), pages 73-80.

Les domaines de rapport composé (A)/composé (B) indiqués ci-dessus ne sont nullement limitatifs de la portée de l'invention, mais sont plutôt cités à titre indicatif, l'homme du métier étant tout à fait en mesure d'effectuer des essais complémentaires pour trouver d'autres valeurs du rapport de doses de ces deux composés, pour lesquels un effet synergique est observé.

De manière habituelle, les compositions selon l'invention comprennent entre 0,00001 et 100%, de préférence entre 0,001 et 80%, de composés actifs, que ces composés soient associés, ou qu'ils soient sous la forme de deux matières actives utilisées séparément.

Naturellement, les compositions fongicides selon l'invention à base d'au moins un composé (A) et d'au moins un composé (B) peuvent également comprendre un ou plusieurs autres produits actifs choisis parmi les fongicides herbicides insecticides et/ou régulateurs de croissance des végétaux, selon l'utilisation pour laquelle elles sont destinées.

Outre ces actifs complémentaires, les compositions fongicides selon l'invention peuvent comporter également tout autre excipient et/ou auxiliaire utile dans les formulations phytosanitaires tel que par exemple un support inerte convenable en agriculture et éventuellement un tensioactif convenable en agriculture.

S'agissant des présentations des compositions selon l'invention, il y a lieu d'indiquer qu'elles se prêtent à un grand nombre de formulations. Ainsi, on peut employer ces compositions comme générateur d'aérosol; appât (prêt à l'emploi); concentré pour préparation d'appâts ; appât en stock ; suspension de capsules ; produit pour nébulisation a froid ; poudre pour poudrage; concentré émulsionnable ; émulsion de type aqueux/aqueuse ; émulsion de type huileux/ inverse ; granulé encapsulé ; granulé fin ; suspension concentrée pour traitement de semences ; gaz comprimé ; produit générateur de gaz ; appât sur grain ; appât granulé ; granulé ; produit pour nébulisation à chaud ; macrogranulé ; microgranulé ; poudre à disperser dans l'huile ; suspension concentrée diluable dans l'huile ; liquide miscible dans l'huile ; pâte ; bâtonnet à usage agropharmaceutique ; appât en plaquette ; poudre pour traitement de semences à sec ; appât sur brisures ; semences traitées ou enrobées; bougie fumigène ; cartouche fumigène ; fumigène ; granulé fumigène ; bâtonnet fumigène ; comprimé fumigène ; boite fumigène ; concentré soluble ; poudre soluble ; liquide pour traitement de semences ; suspension concentrée (= concentré fluidifiable) ; poudre de piste ; liquide pour application à très bas volume ; suspension pour application à très bas volume ; produit diffuseur de vapeur ; granulés ou comprimés à disperser dans l'eau ; poudre mouillable pour traitement humide ; granulés ou comprimés solubles dans l'eau ; poudre soluble pour traitement de semences ; poudre mouillable.

Ces compositions recouvrent non seulement les compositions prêtes à être appliquées sur la culture à traiter au moyen d'un dispositif adapté, tel qu'un dispositif de pulvérisation, mais également les compositions concentrées commerciales qui doivent être diluées avant application sur la culture.

Les compositions décrites ci-après sont utilisées en général pour application à des végétaux en croissance, ou à des lieux où l'on fait pousser des cultures, ou à l'enrobage ou au pelliculage des semences.

Les compositions selon l'invention sont, de manière appropriée, appliqués à la végétation et en particulier aux feuilles infestées ou susceptibles d'être infestées par les champignons phytopathogènes. Une autre méthode d'application des composés ou des compositions selon l'invention est l'addition d'une formulation contenant les matières actives, à l'eau d'irrigation. Cette irrigation peut être une irrigation au moyen d'arroseurs.

Pour leur emploi dans la pratique, les compositions selon l'invention peuvent être utilisées seules et peuvent aussi avantageusement être utilisées dans des formulations contenant l'une ou l'autre des matières actives ou encore les deux ensembles, en combinaison ou association avec un ou plusieurs autres composants compatibles qui sont par exemple des charges ou des diluants solides ou liquides, des adjuvants, des tensioactifs, ou équivalents, appropriés pour l'utilisation souhaitée et qui sont acceptables pour des usages en agriculture. Les formulations peuvent être de tout type connu dans le domaine et convenables pour l'application dans tous types de plantations ou de cultures. Ces formulations qui peuvent être préparées de toute manière connue dans ce domaine, font de même partie de l'invention.

Les formulations peuvent aussi contenir d'autres types d'ingrédients tels que des colloïdes protecteurs, des adhésifs, des épaississants, des agents thixotropes, des agents de pénétration, des huiles à pulvériser, des stabilisants, des conservateurs (en particulier des agents anti-moisissures), des agents séquestrants, ou autres, ainsi que d'autres ingrédients actifs connus possédant des propriétés pesticides (en particulier fongicides, insecticides, acaricides, nématicides) ou possédant des propriétés de régulateur de croissance des plantes. Plus généralement, les composés utilisés dans l'invention peuvent être combinés avec tous additifs solides ou liquides correspondants aux techniques de formulations usuelles.

Dans le présent exposé, le terme "charge" signifie un composant organique ou inorganique, naturel ou synthétique, avec lequel les composants actifs sont combinés pour faciliter son application, par exemple, aux plantes, aux semences, ou au sol. Cette charge est par conséquent généralement inerte et elle doit être acceptable (par exemple acceptable pour des usages agronomiques, en particulier pour traiter les plantes).

La charge peut être solide, par exemple, argiles, silicates naturels ou synthétiques, silice, résines, cires, fertilisants solides (par exemple sels d'ammonium), minéraux naturels du sol, tels que kaolins, argiles, talc, chaux, quartz, attapulgite, montmorillonite, bentonite ou terres à diatomées, ou minéraux synthétiques, tels que silice, alumine, ou silicates, en particulier silicates d'aluminium ou de magnésium. Les charges solides convenables pour les granulés sont les suivantes : roches naturelles, pilées ou concassées, telles que calcite, marbre, pierre ponce, sépiolite, et dolomite ; granulés synthétiques de farines inorganiques ou organiques ; granulés de matériau organique tel que sciure, écorce de noix de coco, épi ou enveloppe de maïs ou tige de tabac ; kieselguhr, phosphate tricalcique, liège en poudre, ou noir de carbone adsorbant ; polymères solubles dans l'eau, résines, cires ; ou fertilisants solides. De telles compositions peuvent, si on le désire, contenir un ou plusieurs agents compatibles comme les agents mouillants, dispersants, émulsifiants ou colorants qui lorsqu'ils sont solides peuvent aussi servir de diluants.

Les charges peuvent aussi être liquides, par exemple : eau, alcools, en particulier butanol ou glycol, ainsi que leurs éthers ou esters, en particulier l'acétate de méthylglycol ; cétones, en particulier acétone, cyclohexanone, méthyléthylcétone, méthylisobutylcétone ou isophorone ; coupes de pétrole telles que hydrocarbures parafiniques ou aromatiques, en particulier xylènes ou alkylnaphtalènes ; huiles minérales ou végétales ; hydrocarbures aliphatiques chlorés, en particulier trichloroéthane ou chlorure de méthylène; hydrocarbures aromatiques chlorés, en particulier chlorobenzènes ; solvants solubles dans l'eau ou fortement polaires tels que diméthylformamide, diméthylsulfoxyde, N, N-diméthylacétamide, N-méthylpyrro-lidone ; N-octylpyrrolidone, gaz liquéfiés ; ou autres, qu'ils soient pris séparément ou en mélange.

L'agent tensioactif peut être un agent émulsifiant, un agent dispersant, ou un agent mouillant, de type ionique ou non ionique ou un mélange de ces agents tensioactifs. Parmi ceux-ci, on utilise par exemple des sels d'acides polyacryliques, des sels d'acides lignosulfoniques, des sels d'acides phénolsulfoniques ou naphtalènesulfoniques, des polycondensats d'oxyde d'éthylène avec des alcools gras ou des acides gras ou des esters gras ou des amines grasses, des phénols substitués (en particulier des alkylphénols ou des arylphénols), des esters-sels de l'acide sulfosuccinique, des dérivés de la taurine (en particulier des alkyltaurates), des esters phosphoriques d'alcools ou de polycondensats d'oxyde d'éthylène avec des phénols, des esters d'acides gras avec des polyols, ou des dérivés fonctionnels sulfates, sulfonates ou phosphates des composés décrits ci-dessus. La présence d'au moins un agent tensioactif est généralement essentielle lorsque les matières actives et/ou la charge inerte sont seulement peu solubles ou non solubles dans l'eau et lorsque la charge de la dite composition à appliquer est de l'eau.

Les formulations selon l'invention peuvent de plus contenir d'autres additifs tels que des adhésifs ou des colorants. Des adhésifs tels que la carboxyméthyl-cellulose, ou des polymères synthétiques ou naturels sous forme de poudres, granulés ou matrices, tels que gomme arabique, latex, polyvinylpyrrolidone, alcool polyvinylique ou acétate de polyvinyle, des phospholipides naturels, tels que céphalines ou lécithines, ou des phospholipides synthétiques peuvent être utilisés dans les formulations. Il est possible d'utiliser des colorants tels que des pigments inorganiques, tels que par exemple : oxydes de fer, oxydes de titane, ou Bleu de Prusse ; matières colorantes organiques, telles que celles du type alizarines, azoïques, ou phtalocyanines métalliques ; ou des oligo-éléments tels que sels de fer, manganèse, bore, cuivre, cobalt, molybdène ou zinc.

Les formulations contenant les compositions de l'invention, qui sont employées pour lutter contre les champignons phytopathogènes des cultures, peuvent aussi contenir des stabilisants, d'autres agents fongicides, des insecticides, acaricides, nématicides, anti-helminthes ou anti-coccidoses, des bactéricides, des agents attractants ou répulsifs, des désodorisants, des arômes, ou des colorants.

Ceux-ci peuvent être choisis à dessein pour améliorer la puissance, la persistance, la sécurité, le spectre d'action sur les champignons phytopathogènes des cultures ou pour rendre la composition capable d'accomplir d'autres fonctions utiles pour les surfaces traitées.

Pour leur emploi en agriculture, les compositions selon l'invention, sont par conséquent formulées sous des formes solides ou liquides variées.

Comme formulations solides, on peut citer les poudres pour poudrage (à teneur en matières actives pouvant aller jusqu'à 100 %) et les granulés, notamment ceux obtenus par extrusion, atomisation, compactage, imprégnation d'un support granulé, granulation à partir d'une poudre (la teneur en matières actives dans ces granulés étant entre 0,5 et 80% pour ces derniers cas).

Les compositions fongicides selon l'invention peuvent encore être utilisées sous forme de poudres pour poudrage ; on peut aussi utiliser des formulations comprenant 50 g de matières actives et 950 g de talc ; on peut aussi utiliser des formulations comprenant 20 g de matières actives, 10 g de silice finement divisée et 970 g de talc ; on mélange et broie ces constituants et on applique le mélange par poudrage.

Comme formulations liquides ou destinées à constituer des compositions liquides lors de l'application, on peut citer les solutions, en particulier les concentrés solubles dans l'eau, les concentrés émulsionnables, les émulsions, les

suspensions concentrées, les poudres mouillables (ou poudre à pulvériser).

Les suspensions concentrées, applicables en pulvérisation, sont préparées de manière à obtenir un produit fluide stable ne se déposant pas et conduisant à une bonne bio-disponibilité des matières actives. Ces suspensions contiennent habituellement de 5 % à 75 % de matières actives, de préférence de 10 % à 25 %, de 0,5 à 75 % d'agents tensioactifs, de préférence de 5 % à 50 %, de 0 à 10 % d'additifs appropriés, comme des agents épaississants d'origine organique ou minérale, des agents anti-mousses, des inhibiteurs de corrosion, des adhésifs, des conservateurs, comme par exemple le Proxel GXL®, des antigels et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau. Dans certains cas, et notamment pour les formulations destinées au traitement de semences, un ou plusieurs colorants pourront être ajoutés.

Pour les applications foliaires, le choix des tensioactifs est primordial pour assurer une bonne biodisponibilité des matières actives ; ainsi, on utilisera de préférence une combinaison d'un tensioactif à caractère hydrophile (HLB > 10) et d'un tensioactif à caractère lipophile (HLB < 5). De telles combinaisons d'agents tensioactifs sont par exemples décrites dans la demande de brevet français non encore publiée n° 00/04015.

S'agissant de la préparation des composés (A) on se référera à la demande de brevet internationale WO-00/46184.

Concernant l'obtention des composés (B) on pourra se reporter à l'ouvrage "The Electronic Pecticide Manual - Version 1.0" - British Crop Protection Council - Ed Clive Tomlin.

Selon un autre de ces objets, l'invention se rapporte à un procédé de lutte, à titre curatif, préventif ou éradiquant, contre les champignons phytopathogènes des cultures, caractérisé en ce que l'on applique sur le sol où poussent ou où sont susceptibles de pousser les végétaux, sur les feuilles et/ou les fruits des végétaux ou sur lés semences des végétaux, une quantité efficace (agronomiquement efficace) et non phytotoxique d'une composition fongicide telle que définie ci-dessus.

Dans ce procédé, on met en oeuvre une composition préparée à l'avance par mélange des 2 composés actifs (A) et (B).

Selon une variante d'un tel procédé de lutte à titre curatif, préventif ou éradiquant contre les champignons phytopathogènes des cultures :

- on met en oeuvre une combinaison d'au moins composé (A) et d'au moins un composé (B) tels que définis ci-dessus;
- on applique simultanément, séparément ou séquentiellement les composés (A) et (B) sur le sol où poussent ou où sont susceptibles de pousser les végétaux, sur les feuilles et/ou les fruits des végétaux ou sur les semences des végétaux, une quantité efficace (agronomiquement efficace) et non phytotoxique.

Cette variante correspond à une préparation extemporanée de la composition fongicide.

On peut également appliquer simultanément, successivement ou séparement de manière à avoir l'effet conjugué (A)/(B), de composition contenant chacune l'une des deux matières actives (A) ou (B).

De manière préférée, les compositions fongicides selon l'invention contiennent habituellement de 0,5 à 95 % de la combinaison du composé (A) et du composé (B). Il peut s'agir de la composition concentrée c'est-à-dire du produit commercial associant le composé (A) et le composé (B). Il peut s'agir également de la composition diluée prête à être appliquée sur les cultures à traiter. Dans ce dernier cas la dilution à l'eau peut être effectuée soit à partir d'une composition concentrée commerciale renfermant le composé (A) et le composé (B) (ce mélange est appelé "prêt-à-l'emploi" ou encore "ready mix", en langue anglaise), soit au moyen du mélange extemporané (appelé en anglais "tank mix") de deux compositions concentrées commerciales renfermant chacune le composé (A) et le composé (B).

Le traitement des cultures contre les maladies phytopathogènes, à l'aide de la composition fongicide selon l'invention, s'opère, par exemple par application ou par administration, avec une quantité efficace et non-phytotoxique de la susdite composition ou combinaison fongicide, sur les parties aériennes des cultures ou sur le sol où elles poussent, lesdites cultures étant celles qui sont infestées ou qui sont susceptibles d'être infestées par une maladie phytopathogène tel que l'oïdium, la rouille brune ou la septoriose. Par traitement de la culture on entend également le traitement des produits de reproduction de la culture, telles que les semences ou les tubercules par exemple.

Avantageusement la quantité de composition ou de combinaison fongicide correspond à une dose de composé (A) et de composé (B) comprise entre environ 1g/ha et environ 2 000g/ha, de préférence entre 1g/ha et 1000g/ha.

Dans des conditions spécifiques, par exemple selon la nature du champignon phytopathogène à traiter, une dose plus faible peut offrir une protection adéquate. Inversement, certaines conditions climatiques, des résistances ou d'autres facteurs peuvent requérir des doses de matière active plus élevées.

Les doses d'utilisation efficaces des associations employées dans l'invention peuvent varier dans de larges proportions, en particulier selon la nature des champignons phytopathogènes à éliminer ou le degré d'infestation, par exemple, des plantes par ces champignons.

La dose optimale dépend habituellement de plusieurs facteurs, par exemple du type de champignon phytopathogène à traiter, du type ou du niveau de développement de la plante infestée, de la densité de végétation, ou encore de la méthode d'application. Plus préférentiellement, une dose efficace de matières actives (A) et (B) est comprise entre environ 5g/ha et environ 700g/ha.

Sans que cela ne soit limitatif la culture traitée à l'aide de la composition ou de la combinaison fongicide selon l'invention est par exemple une céréale mais cela pourrait être de la vigne, des légumes, de la luzerne, du soja, des cultures maraîchères, du gazon, du bois ou des plantes horticoles.

Les champignons phytopathogènes des cultures qui peuvent être combattus par ce procédé sont sélectionnés dans l'ensemble comprenant :

- le groupe des oomycètes :
  - du genre *Phytophthora* tel que *Phytophthora phaseoli, Phytophthora citrophthora, Phytophthora capsici, Phytophthora cactorum, Phytophthora palmivora, Phytophthora cinnamoni, Phytophthora megasperma, Phytophthora parasitica, Phytophthora fragariae, Phytophthora cryptogea, Phytophthora porri, Phytophthora nicotianae, Phytophthora infestans* (mildiou des solanées, notamment de la pomme de terre ou de la tomate);
  - de la famille des Péronosporacées, notamment *Plasmopara viticola* (mildiou de la vigne), *Plasmopara halstedei* (mildiou du tournesol), *Pseudoperonospora sp* (notamment mildiou des cucurbitacees (*Pseudoperonospora cubensis*) et du houblon (*Pseudoperonospora humuli*)), *Bremia lactucae* (mildiou de la laitue), *Peronospora tabacinae* (mildiou du tabac), *Peronospora destructor* (mildiou de l'oignon), *Peronospora parasitica* (mildiou du chou), *Peronospora farinosa* (mildiou des endives et mildiou de la betterave);

- le groupe des adélomycètes (ascomycètes):
  - du genre *Alternaria,* par exemple *Alternaria solani* (alternariose des solanées, et notamment de la tomate et des pommes de terre),
  - du genre *Guignardia,* notamment *Guignardia bidwellB* (black rot de la vigne),
  - du genre *Venturia,* par exemple *Venturia inaequalis, Venturia pirina* (tavelures du pommier ou du poirier),
  - du genre *Oïdium,* par exemple oïdium de la vigne (*Uncinula necator*) ; oïdium des cultures légumières, par exemple *Erysiphe polygoni* (oïdium des crucifères) ; *Leveillula taurica, Erysiphe cichoracearum, Sphaerotheca fuligena* (oïdium des cucurbitacées, des composées, de la tomate) ; *Erysiphe communis* (oïdium de la betterave et du chou) ; *Erysiphe pisi* (oïdium du pois, de la luzerne) ; *Erysiphe polyphaga* (oïdium du haricot et du concombre) ; *Erysiphe umbelliferarum* (oïdium des ombellifères, notamment de la carotte) ; *Sphaerotheca humuli* (oïdium du houblon) ; oïdiums du blé et de l'orge (*Erysiphe graminis forma specie tritici* et *Erysiphe graminis forma specie hordei*),
  - du genre *Taphrina,* par exemple *Taphrina deformans* (cloque du pêcher),
  - du genre *Septoria,* par exemple *Septoria nodorum* ou *Septoria tritici* (septoriose des céréales),
  - du genre *Sclerotinia*, par exemple *Sclerotinia sclerotinium,*
  - du genre *Pseudocercosporella,* par exemple *P. herpotrichoides* (piétin verse des céréales),
  - du genre *Botrytis cinerea* (vigne, cultures légumières et maraîchères, pois,.....),
  - du genre *Phomopsis viticola* (excoriose de la vigne),
  - du genre *Pyrenospora,*
  - du genre *Helminthosporium,* par exemple *Helminthosporium tritici repentis* (helininthosoporiose de blé) ou *Helminthosporium teres* (helminthosporiose de l'orge),
  - du genre *Drechslera* ou *Pyrenophora,*

- du groupe des Basidiomycètes :
  - du genre *Puccinia,* par exemple *Puccinia recondita* ou *strBformis* (rouilles du blé), *Puccinia triticina, Puccinia hordei,*
  - de la famille *Rhizoctonia* spp, par exemple *Rhizoctonia solani.*

Outre leurs activités fongicides au coeur de l'invention, les compositions ou combinaisons sus définies peuvent également avoir une action biocide contre les bactéries et les virus, tels que par exemple :

- le feu bactérien, *Erwinia amylovora* ;
- la tache bactérienne des arbres fruitiers à noyau, *Xanthomonas campestris* ;
- la bactériose du poirier, *Pseudomonas syringae* ;
- la bactériose du riz et des céréales ;

- les virus présents sur le riz, les cultures légumières et céréalières.

Les cultures envisagées dans le cadre de la présente invention sont de préférence les cultures céréalières (blé, orge, maïs, riz) et légumières (haricot, oignon, cucurbitacées, chou, pomme de terre, tomate, poivron, épinard, pois, laitue, céleri, endives), les cultures fruitières (fraisiers, framboisiers), les cultures arboricoles (pommiers, poiriers, cerisiers, ginseng, citronniers, cocotiers, pécaniers, cacaoyers, noyers, hévéas, oliviers, peupliers, bananiers), la vigne, le tournesol, la betterave, le tabac et les cultures ornementales.

Un classement fait non plus par champignons ou bactéries visés mais par cultures cibles peut être illustré comme ci-dessous :

- la vigne: oïdium (*Uncinula necator*), mildiou (*Plasmopara viticola*), pourriture (*Botrytis cinerea*), excoriose (*Phomopsis viticola*) et black-rot (*Guignardia bidwellB*),
- les solanées: mildiou (*Phytophthora infestans*), alternariose (*Alternaria solani*) et pourriture (*Botrytis cinerea*),
- les cultures légumières: mildious (*Peronospora* sp., *Bremia lactucae, Pseudoperonospora* sp), altemariose (*Alternaria* sp.), sclérotiniose (*Sclerotinia* sp.), pourriture (*Botrytis cinerea*), pourriture du pied ou des racines. (*Rhizoctonia* spp.), oïdium (*Erysiphe* sp.; *Sphaerotheca fuliginea*),
- l'arboriculture: tavelure (*Venturia inaequalis*, *V. pirina*), maladies bactériennes (*erwinia amylovora, xanthomonas campestris, pseudomonas syringae*), oïdium (*Podosphaera leucotricha*) et moniliose (*Monilia fructigena*),
- les agrumes: tavelure (*Elsinoe fawcetti*), mélanose (*Phomopsis citri*) et maladies à *Phytophthora* sp.,
- le blé, en ce qui concerne la lutte contre les maladies suivantes des semences : les fusarioses (*Microdochium nivale* et *Fusarium roseum*), les caries (*Tilletia caries, Tilletia controversa* ou *Tilletia indica*), la septoriose (*Septoria nodorum*),
- le blé, en ce qui concerne la lutte contre les maladies suivantes des parties aériennes de la plante : le piétin-verse (*Pseudocercosporella herpotrichoïdes*), le piétin-échaudage (*Gaeumannomyces graminis*), la fusariose du pied (*F. culmorum, F. graminearum*), le rhizoctone (*Rhizoctonia cerealis*), l'oïdium (*Erysiphe graminis forma specie tritici*), les rouilles (*Puccinia strBformis* et *Puccinia recondita*), les septorioses (*Septoria tritici* et *Septoria nodorum*) et l'helminthosporiose du blé (*Helminthosporium tritici-vulgaris*),
- le blé et l'orge , en ce qui concerne la lutte contre les maladies bactériennes et virales, par exemple la jaunisse nanisante de l'orge,
- l'orge, en ce qui concerne la lutte contre les maladies suivantes des semences : les helminthosporioses (*Pyrenophora graminea, Bipolaris, Pyrenophora teres* et *Cochliobolus sativus*), le charbon nu (*Ustilago nuda*) et les fusarioses (*Microdochium nivale* et *Fusarium roseum*),
- l'orge, en ce qui concerne la lutte contre les maladies suivantes des parties aériennes de la plante : le piétin-verse (*Pseudocercosporella herpotrichoïdes*), les helminthosporioses (*Pyrenophora teres* et *Cochliobolus sativus*), l'oïdium (*Erysiphe graminis forma specie hordei*), la rouille naine (*Puccinia hordei*) et la rhynchosporiose (*Rhynchosporium secalis*) ;
- la pomme de terre, en ce qui concerne la lutte contre les maladies du tubercule (notamment *Helminthosporium solani, Phoma tuberosa, Rhizoctonia solani, Fusarium solani*) et certaines viroses (virus Y);
- le coton, en ce qui concerne la lutte contre les maladies suivantes des jeunes plantes issues des semences :les fontes de semis et les nécroses du collet (*Rhizoctonia solani, Fusarium oxysporum*), la pourriture noire des racines (*Thielaviopsis basicola*),
- le pois, en ce qui concerne la lutte contre les maladies suivantes des semences : l'anthracnose (*Ascochyta pisi, Mycosphaerella pinodes*), la fusariose (*Fusarium oxysporum*), la pourriture grise (*Botrytis cinerea*), la rouille (*Uromyces pisi*),
- le colza, en ce qui concerne la lutte contre les maladies suivantes des semences : *Phoma lingam* et *Alternaria brassicae,* la pourriture (*Botrytis cinerea*), et sclérotiniose (*Sclerotinia sclerotinium*),
- le maïs, en ce qui concerne la lutte contre les maladies des semences (*Rhizopus* sp., *Penicillium* sp., *Trichoderma* sp., *Aspergillus* sp. *et Gibberella fujikuroï,* les helminthosporioses (*Bipolaris*), la fusariose (*Fusarium oxysporum*),
- le riz: pourriture du pied ou des racines (*Rhizoctonia* spp.),
- le lin, en ce qui concerne la lutte contre la maladie des semences (*Alternaria linicola*),
- la banane: cercosporiose (*Mycosphaerella figiensis*),
- le gazon: rouille, oïdium, helminthosporiose, maladies telluriques (*Microdochium nivale, Pythium* sp., *Rhizoctonia solani, Sclerotinia homeocarpa...*),
- les arbres forestiers, en ce qui concerne la lutte contre les fontes de semis (*Fusarium oxysporum, Rhizoctonia solani*).

Très avantageusement, le procédé de lutte contre les maladies des plantes selon l'invention a montré d'excellents résultats contre les maladie des céréales que sont l'oïdium, la septoriose et la rouille brune.

Par l'expression "on applique aux végétaux à traiter", on entend signifier, au sens du présent texte, que les

compositions fongicides objets de l'invention peuvent être appliquées au moyen de différents procédés de traitement tels que :

- la pulvérisation sur les parties aériennes des dits végétaux d'un liquide comprenant une des dites compositions,
- le poudrage, l'incorporation au sol de granulés ou de poudres, l'arrosage, autour des dits végétaux, et dans le cas des arbres l'injection ou le badigeonnage,
- l'enrobage ou le pelliculage des semences des dits végétaux à l'aide d'une bouillie comprenant une des dites compositions.

La pulvérisation d'un liquide sur les parties aériennes des cultures à traiter est le procédé de traitement préféré.
La présente invention a également pour objet un produit comprenant un composé (A) de formule (I) et un composé (B) en tant que préparation combinée pour utilisation simultanée, séparée ou séquentielle dans la lutte contre les champignons phytopathogènes des cultures en un lieu.
Un autre objet de l'invention qui se rattache au mode de préparation extemporanée de la composition selon l'invention, est constitué par un nécessaire de lutte, à titre curatif ou préventif, contre les champignons phytopathogènes des cultures caractérisé en ce qu'il comprend au moins un composé (A) de formule (I) et au moins un composé (B) tels que définis ci-dessus, destinés à être combinés et utilisés simultanément, séparément ou séquentiellement dans la lutte contre les champignons phytopathogènes des cultures en un lieu.
Il s'agit donc d'un conditionnement dans lequel l'utilisateur trouve tous les ingrédients de préparation de la formulation fongicide qu'il souhaite appliquer sur les cultures. Ces ingrédients qui comprennent notamment les actifs (A) et (B) et qui sont emballés séparément se présentent sous forme de poudre ou sous forme de liquide plus ou moins concentré. Il suffit à l'utilisateur de procéder au mélange selon les doses prescrites et au rajout de quantités de liquide par exemple d'eau nécessaire pour obtenir une formulation prête à l'emploi et applicable sur les cultures.
Convient notamment, un produit pour l'application simultanée, séparée, alternée ou séquencée d'au moins un composé fongicide (A) de formule (I) et un composé fongicide (B).
Les exemples suivants sont donnés à titre purement illustratifs de l'invention et ne la limitent en aucune façon.

Exemples

Ils ont pour but de donner une illustration de l'efficacité des compositions selon l'invention sur les maladies des céréales, notamment les compositions associant le composé (A) de nom chimique *N*-éthyl-*N*-méthyl-*N'*-[4-(chloro-3-trifluorométhylphénoxy)-2,5-xylyl]-formamidine aux composés fongicides de type triazole et morpholine.
Les essais sur céréales ont été réalisés en plein champ.

1- Conditions et objectifs

Ces essais au champ ont donc pour objectif de tester l'efficacité de composés (A) de formule (I), notamment la *N*-éthyl-*N*-méthyl-*N'*-[4-(chloro-3-trifluorométhylphénoxy)-2,5-xylyl]-formamidine, seule à 125g/ha et associée à 2 fongicides déjà commercialisés: fluquinconazole (100g/ha) et fenpropimorphe (750g/ha) représentant 2 classes de composés fongicides. L'oïdium, la rouille brune et la septoriose *mycosphaerella graminicola* (*Septoria tritici*) sont les principales maladies traitées.

2- Matériel et méthode

Les produits testés sont donc

- la *N*-éthyl-*N*-méthyl-*N'*-[4-(chloro-3-trifluorométhylphénoxy)-2,5-xylyl]-formamidine comme composé (A) à 125g/ha en formulation de type EC à 100g/l,
- le fluquinconazole come composé (B) à 100g/ha en formulation à 100g/l,
- le fenpropimorph comme autre composé (B) à 750g/ha en à 750g/l,
- la combinaison composé (A) et fluquinconazole à 125+100g/ha en préparation extemporanée,
- la combinaison composé (A) et fenpropimorph à 125+750g/ha également en préparation extemporanée,
- les produits de référence que sont l'azoxystrobin à 250g/ha sur rouille brune et septoriose,
- l'epoxyconazole+kresoxim-methyl à 125+125g/ha sur les 3 maladies,
- le quinoxyfen à 150g/ha sur oïdium.

Chaque essai comporte 3 répétitions et des parcelles témoins non traitées sont incluses dans le dispositif d'expérimentation afin de mesurer l'intensité des maladies.

Les conditions d'expérimentation sont résumées dans le tableau 1 ci-dessous.

Tableau 1

| Pays | Essai | Espèce | Surface élémentaire par parcelle | Variété | Date de semis | Application(s) | |
|---|---|---|---|---|---|---|---|
| | | | | | | stadeBBCH Date | 1/ha |
| France | 1 | Blé | 10m2 | Récital | 20/10 /00 | BBCH31<br>23/03/01<br>BBCH37<br>18/04/01 | 260 |
| Allemagne | 2 | Blé | 10m2 | Rialto | 23/10 /00 | BBCH30<br>09/04/01<br>BBCH35<br>14/05/01 | 400 |
| Allemagne | 3 | Blé | 10m2 | Ritmo | 23/10 /00 | BBCH30<br>09/04/01 | 400 |

Tous les essais sont conduits en conditions de contamination naturelle. Le matériel d'application est un pulvérisateur à dos à pression d'air comprimé constante. Les buses de pulvérisation sont à fentes.
L'échelle BBCH a été décrite dans Compendium of growth stage identification eys for mono- and dicotyledoneus plants, extended BBCH scale, Autumn 1994 by Reinold Stauss, Basle, a joint publication of BBA-BSA-IGZ-IVA AgrEvo-BASF-Bayer-Ciba
Les résultats d'efficacité sont issus de contrôles réalisés au champ :

- par évaluation globale (% d'infestation)
- évaluation de surface malade (% de surface malade) sur un échantillon de 25 feuilles
- comptage du nombre de sores par feuilles sur un échantillon de 25 feuilles
- comptage des feuilles infestées (% de feuilles infestées) sur un échantillon de 25 feuilles

Les résultats d'analyse de variance sont issus d'un test Newmann et Keuls (5%).

3 - Résultats

- Oïdium du blé (*Erysiphe graminis*)

Ce résultat est mesuré 59 jours après l'application des produits sur blé.
Le quinoxyfen, en limite de persistance, garde encore une efficacité faible mais significative.
fluquinconazole et fenpropimorphe n'ont plus d'activité.
Les associations selon l'invention ont une meilleure persistance d'activité que les références ou les matières actives utilisées seules.

*- Septoria tritici (mycosphaerella graminicola)*

Ce résultat est mesuré 29 jours après la seconde application.
Les associations selon l'invention ont encore une meilleure persistance d'activité que les références azoxystrobin et epoxyconazole+kresoxim-methyl , ou que les matières actives utilisées seules.

- Rouille brune (*puccinia recondita*)

Ce résultat est mesuré 29 jours après la seconde application.
Les associations selon l'invention ont à nouveau une meilleure persistance d'activité que les matières actives utilisées seules.
D'autre part, le mélange selon l'invention avec le fluquinconazole possède des propriétés éradicantes sur rouille brune supérieures à celle des produits seuls (observation visuelle suite à un contrôle réalisé 13 jours après un traitement).

4- Conclusion

Les différents résultats obtenus en plein champ démontrent que le composé (A) peu persistant par lui même, permet d'améliorer significativement la persistance d'activité des composés (B) fluquinconazole et fenpropimorphe sur 3 maladies majeures des céréales: l'oïdium, la rouille brune et la septoriose. Cette meilleure persistance des associations selon l'invention permet d'atteindre des niveaux d'efficacité proches ou supérieurs aux références du marché.

## Revendications

**1.** Composition fongicide comprenant :

A) au moins un dérivé d'arylamidine de formule (I) :

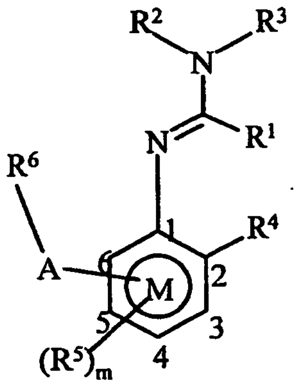

(A)

dans laquelle :

- $R^1$ est un alkyle, un alcényle, un alcynyle, un groupement monovalent carbocyclique ou hétérocyclique, chacun de ces groupements pouvant être substitué, ou l'hydrogène;
- $R^2$ et $R^3$, qui peuvent être identiques ou différents, sont l'un quelconque des groupements défini pour $R^1$; un cyano; un acyle; $-OR^a$ ou $-SR^a$, avec $R^a$ correspondant à un alkyle, un alcényle, un alcynyle, un groupement monovalent carbocyclique ou hétérocyclique, chacun de ces groupements pouvant être substitué, ou $R^2$ et $R^3$, ou $R^2$ et $R^1$ peuvent former ensemble et avec les atomes qui les relient, un cycle pouvant être substitué;
- $R^4$ est un alkyle, un alcényle, un alcynyle, un groupement monovalent carbocyclique ou hétérocyclique, chacun de ces groupements pouvant être substitué, un groupement hydroxyle; mercapto; azido; nitro; halogèno; cyano; acyle éventuellement substitué, amino; cyanato; thiocyanato; $-SF_5$; $-OR^a$; $-SR^a$ ou $-Si(R^a)_3$;
- m = 0 à 3;
- l'éventuel $R^5$ ou les éventuels $R^5$, qui peuvent être identiques ou différents entre eux, répondent à la même définition que celle donnée ci-dessus pour $R^4$;
- $R^6$ est éventuellement substitué par un groupement monovalent carbocyclique; et
- A est une liaison directe, -O-, $-S(O)_n-$, $NR^9-$, $-CR^7=CR^7-$, -C≡C-, $-A^1-$, $-A^1-A^1$, $-O-(A^1)_k-O-$, $-O-(A^1)_k-$, $-A^3-$, $-A^4-$, $-A^1O-$, $-A^1S(O)_n-$, $-A^2-$, $OA^2-$, $-NR^9A^2-$, $-OA^2-A^1-$, $-OA^2-C(R^7)=C(R^8)-$, $-S(O)_nA^1-$, $-A^1-A^4-$, $-A^1-A^4-C(R^8)=N-N=CR^8-$, $-A^1-A^4-C(R^8)=N-X^2-X^3-$, $-A^1-A^4-A^3-$, $-A^1-A^4-N(R^9)-$, $-A^1-A^4-X-CH_2-$, $-A^1-A^4-A^1-$, $-A^1-A^4-CH_2X-$, $-A^1-A^4-C(R^8)=N-X^2-X^3-X^1-$, $-A^1-X-C(R^8)=N-$, $-A^1-X-C(R^8)=N-N=CR^8-$,$-A^1-X-C(R^8)=N-N(R^9)-$, $-A^1-X-A^--X^1-$, $-A^1-O-A^3-$, $-A^1-O-C(R^7)=C(R^8)-$,$-A^1-O-N(R^9)-A^2-N(R^9)-$, $-A^1-O-N(R^9)-A^2-$, $-A^1-N(R^9)-A^2-N(R^9)-$,$-A^1-N(R^9)-A^2-$, $-A^1-N(R^9)-N=C(R^8)-$, $-A^3-A^1-$, $-A^4-A^3-$, $-A^2-NR^9-$, $-A^1-A^2-X^1-$, $-A^1-A^1-A^2-X^1-$, $-O-A^2-N(R^9)-A^2-$, $-CR^7=CR^7-A^2-X^1-$, $-C≡C-A^2-X^1-$, $-N=C(R^8)-A^2-X^1-$, $-C(R^8)=N-N=C(R^8)-$, $-C(R^8)=N-N(R^9)-$, $-(CH_2)_2-O-N=C(R^8)-$ ou $-X-A^2-N(R^9)-$

avec

n = 0, 1 ou 2,

k=1 à 9,

$A^1$ = -CHR$^7$-,
$A^2$ = -C(=X)-,
A3 = -C(R$^8$)=N-O-,
$A^4$ = -O-N=C(R$^8$)-,
X = O ouS,
$X^1$ = O, S, NR$^9$ ou une liaison directe,
$X^2$ = O, NR$^9$ ou une liaison directe,
$X^3$ = hydrogène, -C(=O)-, -$SO_2$- ou une liaison directe,
$R^7$ , identiques ou différents entre eux , correspondent chacun à un alkyle éventuellement substitué, à un cycloalkyle ou un phényle, chacun de ces groupements pouvant être substitué, l'hydrogène, un halogène, un cyano, ou un acyle;
$R^8$, identiques ou différents entre eux , correspondent chacun à un alkyle, un alcényle, un alcynyle, un alcoxy, un alkylthio, chacun de ces groupements pouvant être substitué, un groupement monovalent carbocyclique ou hétérocyclique qui peut être éventuellement substitué, ou l'hydrogène;
$R^9$, identiques ou différents entre eux , correspondent chacun à un alkyle éventuellement substitué, à un groupement monovalent carbocyclique ou hétérocyclique qui peut être éventuellement substitué, ou à un acyle; ou deux groupements $R^9$ peuvent former ensemble et avec les atomes qui les relient, un cycle à 5-7 chaînons;
le groupement représenté sur le coté droit de la liaison A est relié à $R^6$; ou -A-$R^6$ et $R^5$ forment ensemble avec le cycle benzène M, un système de cycles condensés éventuellement substitué(s);
ainsi que les éventuels isomères optiques et/ou géométriques, tautomères et sels d'addition à un acide ou une base, acceptables dans le domaine de l'agriculture, de ces dérivés de formule (I); et leurs mélanges; et

B) au moins un autre composé fongicide connu, de préférence choisi dans le groupe comprenant: les triazoles, les triazolinones, les imidazoles, les strobilurines et les morpholines, leurs éventuels isomères optiques et/ou géométriques, tautomères et sels d'addition à un acide ou une base, acceptables dans le domaine de l'agriculture, et leurs mélanges.

**2.** Composition selon la revendication 1 telle que le composé (A) est de formule (I) dans laquelle :

$R^1$ est un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol par ou un halogène, ou l'hydrogène;
$R^2$ et $R^3$ qui peuvent être identiques ou différents et qui répondent à la même définition que celle donnée ci-dessus pour $R^1$ ou qui correspondant à un alcoxy, un alcoxyalkyle, un benzyloxy, un cyano ou un alkylcarbonyle;
$R^4$ est un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol ou par un halogène; un hydroxyle; un halogène; un cyano; un acyle (de préférence : -C(=O)$R^c$, -C(=S)$R^c$ or -S(O)$_p$$R^c$, avec $R^c$ correspondant à un alkyle, un haloalkyle, alcoxy, haloalcoxy, alkylthiol, une amine, une monoalkylamine, une dialkylamine ou un phényle éventuellement substitué par un alkyle, par un haloalkyle, par un alcoxy, par un haloalcoxy, ou par un alkylthiol;
m = 0 ou 1;
quand il est présent, $R^5$ est un groupement répondant à la même définition que celle donnée ci-dessus pour $R^4$,
A est une liaison directe, -O-, -S-, NR$^9$-, -CHR$^7$- ou -O-CHR$^7$-,
avec $R^9$, quand il est présent correspondant à un alkyle, un alcényle ou un alcynyle, chacun de ces groupements pouvant être substitué par un alcoxy, un haloalcoxy, un alkylthiol, halogène ou un phényle éventuellement substitué par un alkyle, par un haloalkyle, par un alcoxy, par un haloalcoxy, par un alkylthiol ou par un halogène, ou correspond à l'hydrogène;
et $R^7$ répond à la même définition que celle donnée ci-dessus pour $R^9$ ou représente un hydroxyle; un halogène; un cyano; un acyle; alcoxy; un haloalcoxy ou un alkylthiol;
A est relié à la position 4 du cycle benzène M; et
$R^6$ est un phényle ou un hétérocycle aromatique, éventuellement substitué par un ou plusieurs substituants, identiques ou différents entre eux, et qui peuvent être sélectionné dans la liste suivante: hydroxyle; halogène; cyano; acyle (de préférence -C(=O)$R^c$, -C(=S)$R^c$ ou -S(O)p$R^c$, avec $R^c$ = alkyle, haloalkyle, alcoxy, haloalcoxy, alkylthiol or phényle éventuellement substitué par un alkyle, haloalkyle, alcoxy, haloalcoxy or alkylthiol); amine; alkylamine; dialkylamine; alkyle, haloalkyle, $R^a$O-alkyle, acyloxyalkyle, cyanooxyalkyle, alcoxy; haloalcoxy; alkylthiol; cycloalkyle (de préférence cyclohexyle or cyclopentyle) éventuellement substitué par un alkyle, un haloalkyle, un alcoxy, un haloalcoxy ou par un alkylthiol; et benzyle éventuellement substitué par un alkyle, un

haloalkyle, un alcoxy, un haloalcoxy ou par un alkylthiol.

3. Composition selon l'une ou l'autre des revendications 1 ou 2 telle que le composé (A) de formule (I) possède les caractéristiques suivantes, prises isolement ou en combinaison :

$R^1$=H
$R^2$ = alkyle en C1-C6, de préférence méthyle;
$R^3$ = alkyle en C1-C6, de préférence éthyle;
$R^4$ = alkyle en C1-C6, de préférence méthyle;
$R^5$ = alkyle en C1-C6, de préférence méthyle et $R^5$ est relié au carbone en C5 du cycle benzyle M, avec m=1;
A est relié au carbone en C4 du cycle benzyle M et représente -O- ;
$R^6$ = aryle, de préférence benzyle, avantageusement substitué par au moins un alkyle et/ou par au moins un halogène.

4. Composition selon l'une ou l'autre des revendications 1 à 3 telle que le composé (A) est le *N*-éthyl-*N*-méthyl-*N'*-[4-(chloro-3-trifluorométhylphénoxy)-2,5-xylyl]-formamidine ou le *N*-éthyl-*N*-méthyl-*N'*-[4-(fluoro-3-trifluorométhylphénoxy)-2,5-xylyl]-formamidine, ainsi que les éventuels tautomères et sels d'addition à un acide ou une base, acceptables dans le domaine de l'agriculture.

5. Composition selon l'une ou l'autre des revendications 1 à 4 telle que le composé (B) est sélectionné parmi l'acétate de phénylmercure ; *l'ampelomyces quisqualis* ; l'ac 382042 ; l'azaconazole ; l'azoxystrobine ; l'acibenzolar-s-méthyle, le *bacillui subtilis* ; le bénalaxyle ; le bénomyle ; le biphenyle ; le bitertanole ; la blasticidine-s ; la bouillie bordelaise ; le' boraxe ; le bromuconazole ; le bupirimate ; le calboxine ; le polysulfure de calcium; le captàfole ; le captane ; le carbendazime ; le carboxine, le carpropamide (ktu 3616) ; le cga 279202 ; le chinomethionate ; le chlorothalonile; le chlozolinate; les compositions fongicides à base de cuivre ou de dérivés du cuivre telles que l'hydroxyde de cuivre ; le naphthénate de cuivre ; l'oxychlorure de cuivre ; le sulfate de cuivre ; l'oxide cuivreux ; le cymoxanile ; le cyproconazole ; le cyprodinile ; le cyazofamide, le dazomète ; le débacarbe ; le dichlofluanide ; le dichlomezine ; le dichlorophène ; le diclocymète ; le diclorane ; le diéthofencarbe ; le difenoconazole ; le difenzoquate ; le difenzoquate metilsulfate ; le diflumetorime ; le dimethirimole ; le dimethomorphe ; la dimoxystrobine ; le diniconazole ; le diniconazole-m ; le dinobutone ; le dinocape ; la diphnenylamine, la discostrobine, le dithianon ; le dodemorphe ; le dodemorph acétate ; la dodine ; la dodine base libre ; l'edifenphose ; l'epoxiconazole (bas 480f) ; l'éthaboxame ; l'ethasulfocarbe ; l'ethirimole ; l'etridiazole ; ; la famoxadone ; la fénamidone ; le fénarimole ; le fenbuconazole ; le fenfine ; le fenfurame ; le fenhéxamide ; le fenpiclonile ; le fenpropidine ; le fenpropimorphe ; le fentin acétate ; le fentin hydroxide ; le ferbame ; le ferimzone ; le fluaziname ; le fludioxonile ; le fluoroimide ; le fluquinconazole ; le flusilazole ; le flusulfamide ; le flutolanile ; le flumetover, le flutriafole ; le folpète ; le formaldéhyde ; le fosétyle ; le fosétyle-aluminium ; le fubéridazole ; le furalaxyle ; le *fusarium oxysporum* ; le furamétpyre ; le sulfate de 8-hydroxyquinoline ; le *gliocladium virens* ; le guazatine; le guazatine acétate; le gy-81 ; fhexachlorobenzène ; l'hexaconazole ; fhymexazole ; l'hydroxyquinoline sulfate de potassium, l'icia0858 ; l'ikf-916; fimazalile ; l'imazalile sulfate ; l'imibenconazole ; l'iprobenphos ; l'iminoctadine; l'iminoctadine triacétate ; l'iminoctadine tris [albesilate]; l'ipconazole ; l'iprobenfose; l'iprodione ; l'iprovalicarbe ; l'isoprothiolane, le kasugamycine ; le kasugamycine hydrochlorure hydrate ; le kresoxime-méthyle ; le mancopper ; le mancozebe ; le manebe ; le méfenoxame ; le mépanipyrime ; le mépronile ; le chlorure mercurique ; l'oxide mercurique ; le chlorure mercureux ; le métalaxyle et ses formes énantiomères, en particulier le métalaxyle-m ; le métame ; le métame-sodium ; le métconazole ; le méthasulfocarbe ; l'isothiocyanate de méthyle ; le métirame ; métirame-zinc, le métominostrobine (ssf-126) ; le mon65500 ; le myclotbutanile ; le nabame ; l'acide naphthénique ; le naphthénate de zinc ; le natamycine ; le bis (diméthyidithiocarbamate) de nickel ; le nitrothale-isopropyle ; le nuarimole ; l'octhilinone ; l'ofurace ; l'acide oléique (les acides gras) ; l'oxadixyle ; l'oxine-cuivre ; l'oxycarboxine ; le penconazole ; le pencycurone ; le pentachlorophénole ; le laurate de pentachlorophenyle ; le perfurazoate ; le 2-phénylphénole ; le *phlebiopsis gigantea*; l'acide ; phosphorique et ses dérivés tels que le fosetyle-al, le phthalide, la picoxystrobine, le pipéraline ; la polyoxine b ; les polyoxines ; le polyoxorime ; le probenazole ; le prochloraz ; la procymidone ; le propamocarbe ; l'hydrochlorure de propamocarbe hydrochloride ; le propiconazole ; le propinèbe, la pyraclostrobine ; le pyrazophos ; le pyributicarbe ; le pyrifenox ; le pyriméthanile ; le pyroquilone, le quinoxyfène; le quintozène; le rh-7281 ; la sec-butylamine ; le 2-phénylphenoxide de sodium ; le pentachlorophénoxide de sodium ; le silthiofame, le siméconazole, le spiroxamine (kwg 4168) ; le *streptomyces griseoviridis* ; le soufre ; les huiles de goudron ; le tébuconazole ; le tecnazène ; le tétraconazole ; le thiabendazole ; le thifluzamide ; le thiophanate tel que le thiophanate-méthyle ; le thirame ; le tolclofos-méthyle ; le tolylfluanide ; le triadimefone ; le triadimenole ; la trifloxystrobine ; les triazolopyrimidines, en particulier le cloransulame de méthyle, le flumetsulame, le florasulame, le métosulame, le triazoxide ; le *trichoderma harzianum* ; le tricyclazole ; le tridémorphe ; la trifloxystrobine ; le

triflumizole ; le triforine ; le triticonazole ; la validamycine ; les dérivés de valinamide en particulier l'iprovalicarbe et la benthiavalicarbe ; le vinclozoline ; le zinebe ; le zirame ; le zoxamide et leurs mélanges.

**6.** Composition selon l'une ou l'autre des revendications 1 à 5 telle que le rapport pondéral entre le composé (A) et le composé (B) est tel que
$0{,}001 \leq A/B \leq 500$, de préférence tel que
$0{,}01 \leq A/B \leq 500$, plus préférentiellement encore tel que
$0{,}01 \leq A/B \leq 10$.

**7.** Procédé de lutte, à titre curatif, préventif ou éradiquant, contre les champignons phytopathogènes des cultures, **caractérisé en ce que** l'on applique sur le sol où poussent ou où sont susceptibles de pousser les végétaux, sur les feuilles et/ou les fruits des végétaux ou sur les semences des végétaux, une quantité efficace (agronomiquement efficace) et non phytotoxique d'une composition fongicide selon l'une ou l'autre des revendications 1 à 6.

**8.** Procédé selon la revendication 7 pour la protection des cultures céréalières (blé, orge, maïs, riz) et légumières (haricot, oignon, cucurbitacées, chou, pomme de terre, tomate, poivron, épinard, pois, laitue, céleri, endives), des cultures fruitières (fraisiers, framboisiers), des cultures arboricoles (pommiers, poiriers, cerisiers, ginseng, citronniers, cocotiers, pécaniers, cacaoyers, noyers, hévéas, oliviers, peupliers, bananiers), de la vigne, du tournesol, de la betterave, du tabac, des cultures ornementales, de la luzerne, du soja, des cultures maraîchères, du gazon, du bois ou des plantes horticoles.

**9.** Procédé selon l'une ou l'autre des revendications 7 ou 8 pour la lutte contre les maladies des céréales que sont l'oïdium, la septoriose et la rouille brune.

**10.** Produit pour l'application simultanée, séparée, alternée ou séquencée d'au moins un composé fongicide (A) de formule (I) et un composé fongicide (B) selon l'une ou l'autre des revendications 1 à 6.

## Patentansprüche

**1.** Fungizide Zusammensetzung, die folgendes umfaßt:

A) mindestens ein Arylamidinderivat der Formel (I),

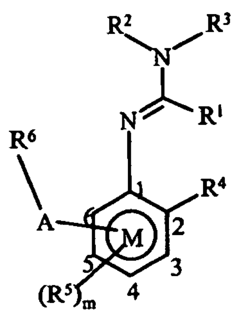

(A)

in der:

- $R^1$ ein Alkyl, ein Alkenyl, ein Alkinyl, eine einwertige carbocyclische oder heterocyclische Gruppe, wobei jede dieser Gruppen substituiert sein kann, oder Wasserstoff bedeutet
- $R^2$ und $R^3$, die gleich oder verschieden sein können, eine beliebige der für $R^1$ definierten Gruppen; ein Cyano; ein Acyl; $-OR^a$ oder $-SR^a$,

wobei $R^a$ einem Alkyl, einem Alkenyl, einem Alkinyl, einer einwertigen carbocyclischen oder heterocyclischen

Gruppe, wobei jede dieser Gruppen substituiert sein kann, entspricht, bedeuten, oder $R^2$ und $R^3$ oder $R^2$ und $R^1$ gemeinsam mit den Atomen, die sie verbinden, einen gegebenenfalls substituierten Zyklus bilden können;

- $R^4$ ein Alkyl, ein Alkenyl, ein Alkinyl, eine einwertige carbocyclische oder heterocyclische Gruppe, wobei jede dieser Gruppen substituiert sein kann, eine Hydroxygruppe; Mercapto; Azido; Nitro; Halogen; Cyano; gegebenenfalls substituiertes Acyl, Amino; Cyanato; Thiocyanato; -$SF_5$; -$OR^a$; -$SR^a$ oder -$Si(R^a)_3$ bedeutet;
- m = 0 bis 3;
- der oder die gegebenenfalls vorhandene(n) Rest (e) $R^5$, die gleich oder verschieden voneinander sein können, der gleichen Definition wie oben für $R^4$ angegeben entsprechen;
- $R^6$ gegebenenfalls durch eine einwertige carbocyclische Gruppe substituiert sein kann; und
- A eine direkte Bindung, -O- , -S(O)$_n$-, -NR$^9$-, -CR$^7$=CR$^7$-, -C≡C-, -A$^1$-, -A$^1$-A$^1$, -O-(A$^1$)$_k$-O-, -O-(A$^1$)$_k$-, -A$^3$-, -A$^4$-, -A$^1$O-, -A$^1$S(O)$_n$-, -A$^2$-, OA$^2$-, -NR$^9$A$^2$-, -OA$^2$-A$^1$-, -OA$^2$-C(R$^7$)=C(R$^8$)-, -S(O)$_n$A$^1$-, -A$^1$-A$^4$-, -A$^1$-A$^4$-C(R$^8$)=N-N=CR$^8$-, -A$^1$-A$^4$-C(R$^8$)=N-X$^2$-X$^3$-, -A$^1$-A$^4$-A$^3$-, -A$^1$-A$^4$-N(R$^9$)-, -A$^1$-A$^4$-X-CH$_2$-, -A$^1$-A$^4$-A$^1$-, -A$^1$-A$^4$-CH$_2$X-, -A$^1$-A$^4$-C(R$^8$)=N-X$^2$-X$^3$-X$^1$-, -A$^1$-X-C(R$^8$)=N- , -A$^1$-X-C(R$^8$)=N-N=CR$^8$-, -A$^1$-X-C(R$^8$)=N-N(R$^9$)-, -A$^1$-X-A$^-$-X$^1$-, -A$^1$-O-A$^3$-, -A$^1$-O-C(R$^7$)=C(R$^8$)-, -A$^1$-O-N(R$^9$)-A$^2$-N(R$^9$)-, -A$^1$-O-N(R$^9$)-A$^2$-, -A$^1$-N(R$^9$)-A$^2$-N(R$^9$)-, -A$^1$-N(R$^9$)-A$^2$-, -A$^1$-N(R$^9$)-N=C(R$^8$)-, -A$^3$-A$^1$-, -A$^4$-A$^3$-, -A$^2$-NR$^9$-, -A$^1$-A$^2$-X$^1$-, -A$^1$-A$^1$-A$^2$-X$^1$-, -O-A$^2$-N(R$^9$)-A$^2$- , -CR$^7$=CR$^7$-A$^2$-X$^1$-, -C≡-C-A$^2$-X$^1$-, -N=C(R$^8$)-A$^2$-X$^1$-, -C(R$^8$)=N-N=C(R$^8$)-, -C(R$^8$)=N-N(R$^9$)-, -(CH$^2$)$_2$-O-N=C(R$^8$)- oder -X-A$^2$-N(R$^9$)-
bedeutet,

wobei
n = 0, 1 oder 2,
k = 1 bis 9,
$A^1$ = -CHR$^7$-,
$A^2$ = -C(=X)-,
$A^3$ = -C(R$^8$)=N-O-,
$A^4$ = -O-N=C(R$^8$)-,
X = O oder S,
$X^1$= O, S, NR$^9$ oder eine direkte Bindung,
$X^2$ = O, NR$^9$ oder eine direkte Bindung,
$X^3$ = Wasserstoff, -C(=O)-, -SO$_2$- oder eine direkte Bindung,
$R^7$-Reste, die gleich oder voneinander verschieden sind, jeweils einem gegebenenfalls substituierten Alkyl, einem Cycloalkyl oder einem Phenyl, wobei jede dieser Gruppen substituiert sein kann, Wasserstoff, einem Halogen, einem Cyano oder einem Acyl entsprechen;
$R^8$-Reste, die gleich oder voneinander verschieden sind, jeweils einem Alkyl, einem Alkenyl, einem Alkinyl, einem Alkoxy, einem Alkylthio, wobei jede dieser Gruppen substituiert sein kann, einer einwertigen carbocyclischen oder heterocyclischen Gruppe, die gegebenenfalls substituiert sein kann, oder Wasserstoff entsprechen;
$R^9$-Reste, die gleich oder voneinander verschieden sind, jeweils einem gegebenenfalls substituierten Alkyl, einer einwertigen carbocyclischen oder heterocyclischen Gruppe, die gegebenenfalls substituiert sein kann, oder Acyl entsprechen; oder zwei $R^9$-Gruppen können gemeinsam mit den Atomen, die sie verbinden, einen Ring mit 5-7 Ringgliedern bilden;
die rechts von der Bindung A dargestellte Gruppe an $R^6$ gebunden ist; oder -A-$R^6$ und $R^5$ gemeinsam mit dem Benzolring M ein System von gegebenenfalls substituierten anellierten Ringen bildet;
sowie die gegebenenfalls vorhandenen landwirtschaftlich annehmbaren optischen und/oder geometrischen Isomere, Tautomere und Säure- oder Basenadditionssalze dieser Derivate der Formel (I); und deren Mischungen; sowie
B) mindestens eine weitere bekannte fungizide Verbindung, vorzugsweise aus der Gruppe der Triazole, Triazolinone, Imidazole, Strobilurine und Morpholine, ihre gegebenenfalls vorhandenen landwirtschaftlich annehmbaren optischen und/oder geometrischen Isomere, Tautomere und Säure- oder Basenadditionssalze, sowie deren Mischungen.

**2.** Zusammensetzung nach Anspruch 1, wobei die Verbindung (A) der Formel (I) entspricht, in der
$R^1$ ein Alkyl, ein Alkenyl oder ein Alkinyl, wobei jede dieser Gruppen durch ein Alkoxy, ein Halogenalkoxy, ein Alkylthiol, Halogen oder durch ein Alkyl, ein Halogenalkyl, ein Alkoxy, ein Halogenalkoxy, ein Alkylthiol oder ein Halogen substituiertes Phenyl substituiert sein kann, oder Wasserstoff bedeutet;
$R^2$ und $R^3$, die gleich oder verschieden sein können und der gleichen Definition wie oben für $R^1$ angegeben entsprechen oder die einem Alkoxy, einem Alkoxyalkyl, einem Benzyloxy, einem Cyano oder einem Alkylcarbonyl entsprechen;

$R^4$ ein Alkyl, ein Alkenyl oder ein Alkinyl, wobei jede dieser Gruppen durch ein Alkoxy, ein Halogenalkoxy, ein Alkylthiol, Halogen oder ein gegebenenfalls durch ein Alkyl, ein Halogenalkyl, ein Alkoxy, ein Halogenalkoxy, ein Alkylthiol oder ein Halogen substituiertes Phenyl substituiert sein können; ein Hydroxyl; ein Halogen; ein Cyano; ein Acyl (vorzugsweise -C(=O)$R^c$, -C(=S)$R^c$ oder -$S(O)_pR^c$, wobei $R^c$ einem Alkyl, einem Halogenalkyl, Alkoxy, Halogenalkoxy, Alkylthiol, einem Amin, einem Monoalkylamin, einem Dialkylamin oder einem gegebenenfalls durch ein Alkyl, ein Halogenalkyl, ein Alkoxy, ein Halogenalkoxy oder ein Alkylthiol substituierten Phenyl entspricht, bedeutet;

m = 0 oder 1;

$R^5$, falls vorhanden, eine Gruppe, die der gleichen Definition wie oben für $R^4$ angegeben entspricht, bedeutet,

A eine direkte Bindung, -O-, -S-, -$NR^9$-, -$CHR^7$- oder -O-$CHR^7$- bedeutet,

wobei $R^9$, falls vorhanden, einem Alkyl, einem Alkenyl oder einem Alkinyl, wobei jede dieser Gruppen durch ein Alkoxy, ein Halogenalkoxy, ein Alkylthiol, Halogen oder ein gegebenenfalls durch ein Alkyl, ein Halogenalkyl, ein Alkoxy, ein Halogenalkoxy, ein Alkylthiol oder ein Halogen substituiertes Phenyl substituiert sein kann oder Wasserstoff entspricht;

und $R^7$ der gleichen Definition wie oben für $R^9$ entspricht oder ein Hydroxyl; ein Halogen; ein Cyano; ein Acyl; Alkoxy; ein Halogenalkoxy oder ein Alkylthiol bedeutet;

A in 4-Stellung des Benzolrings M gebunden ist; und

$R^6$ ein Phenyl oder einen aromatischen Heterozyklus, gegebenenfalls substituiert durch einen oder mehrere gleiche oder voneinander verschiedene Substituenten, die aus der folgenden Reihe stammen können: Hydroxyl; Halogen; Cyano; Acyl (vorzugsweise -C(=O)$R^c$, -C(=S)$R^c$ oder -$S(O)_pR^c$, wobei $R^c$ = Alkyl, Halogenalkyl, Alkoxy, Halogenalkoxy, Alkylthiol oder Phenyl, gegebenenfalls substituiert durch ein Alkyl, Halogenalkyl, Alkoxy, Halogenalkoxy oder Alkylthiol); Amin; Alkylamin; Dialkylamin; Alkyl, Halogenalkyl, $R^a$O-Alkyl, Acyloxyalkyl, Cyanooxyalkyl, Alkoxy; Halogenalkoxy; Alkylthiol; Cycloalkyl (vorzugsweise Cyclohexyl oder Cyclopentyl), gegebenenfalls substituiert durch ein Alkyl, ein Halogenalkyl, ein Alkoxy, ein Halogenalkoxy oder ein Alkylthiol; und gegebenenfalls durch ein Alkyl, ein Halogenalkyl, ein Alkoxy, ein Halogenalkoxy oder ein Alkylthiol substituiertes Benzyl, bedeutet.

**3.** Zusammensetzung nach Anspruch 1 oder 2, wobei die Verbindung (A) der Formel (I) die folgenden Eigenschaften, und zwar allein oder in Kombination, aufweist:

$R^1$ = H
$R^2$ = C1-C6-Alkyl, vorzugsweise Methyl;
$R^3$ = C1-C6-Alkyl, vorzugsweise Ethyl;
$R^4$ = C1-C6-Alkyl, vorzugsweise Methyl;
$R^5$ = C1-C6-Alkyl, vorzugsweise Methyl und $R^5$ ist an den C5-Kohlenstoff des Benzolrings M gebunden, wobei m=1;
A ist an den C4-Kohlenstoff des Benzolrings M gebunden und bedeutet -O-;
$R^6$ = Aryl, vorzugsweise Benzyl, das vorteilhafterweise durch mindestens ein Alkyl und/oder mindestens ein Halogen substituiert ist.

**4.** Zusammensetzung nach einem der Ansprüche 1 bis 3, wobei es sich bei der Verbindung (A) um -*N*-Ethyl-*N*-methyl-*N'*-[4-(chlor-3-trifluormethylphenoxy)-2,5-xylyl]-formamidin oder um *N*-Ethyl-*N*-methyl-*N'*-[4-(fluor-3-trifluormethylphenoxy)-2,5-xylyl]-formamidin sowie die landwirtschaftlich annehmbaren gegebenenfalls vorhandenen Tautomere und Säure- oder Basenadditionssalze handelt.

**5.** Zusammensetzung nach einem der Ansprüche 1 bis 4, wobei die Verbindung (B) aus der folgenden Reihe stammt: Phenylquecksilberacetat; *Ampelomyces quisqualis*; AC 382042; Azaconazol; Azoxystrobin; Acibenzolar-S-Methyl, *Bacillus subtilis*; Benalaxyl; Benomyl; Biphenyl; Bitertanol; Blasticidin-S; Bordeaux-Brühe; Borax; Bromuconazol; Bupirimat; Calboxin; Calciumpolysulfid; Captafol; Captan; Carbendazim; Carboxin, Carpropamid (KTU 3616); CGA 279202; Chinomethionat; Chlorothalonil; Chlozolinat; fungizide Zusammensetzungen auf Basis von Kupfer oder Kupferderivaten, wie Kupferhydroxid; Kupfernaphthenat; Kupferoxychlorid; Kupfersulfat; Kupfer(I)-oxid; Cymoxanil; Cyproconazol; Cyprodinil; Cyazofamid, Dazomet; Debacarb; Dichlofluanid; Dichlomezin; Dichlorophen; Diclocymet; Dicloran; Diethofencarb; Difenoconazol; Difenzoquat; Difenzoquat-methylsulfat; Diflumetorim; Dimethirimol; Dimethomorph; Dimoxystrobin, Diniconazol; Diniconazol-m; Dinobuton; Dinocap; Diphenylamin; Discostrobin, Dithianon; Dodemorph; Dodemorph-acetat; Dodin; Dodin (freie Base); Edifenphos; Epoxiconazol (BAS 480f); Ethaboxam; Ethasulfocarb; Ethirimol; Etridiazol; Famoxadon; Fenamidon; Fenarimol; Fenbuconazole; Fenfin; Fenfuram; Fenhexamid; Fenpicionil; Fenpropidin; Fenpropimorph; Fentin-acetat; Fentinhydroxid; Ferbam; Ferimzon; Fluazinam; Fludioxonil; Fluoroimid; Fluquinconazol; Flusilazol; Flusulfamid; Flutolanil; Flumetover, Flutriafol; Folpet; Formaldehyd; Fosetyl; Fosetyl-aluminium; Fuberidazol; Furalaxyl; *Fusarium oxysporum*; Furametpyr; 8-Hydroxychinolinsulfat; *Gliocladium virens*; Guazatin; Guazatin-acetat; GY-81; Hexachlorbenzol; Hexaconazol; Hymexazol; Kaliumhydroxychinolinsulfat; ICIA 0858; IKF-916; Imazalil; Imazalil-sulfat; Imibenconazol; Iprobenphos; Iminoctadin; Iminoctadin-triacetat; Iminoctadin-tris[albesilat]; Ipconazol; Iprobenfos; Iprodion; Iprovalicarb; Isoprothiolan; Kasugamycin; Kasugamycin-hydrochlorid-hydrat; Kresoxim-methyl; Mancopper; Mancozeb; Maneb; Mefenoxam; Mepanipyrim; Mepronil; Quecksilber(II)-chlorid; Quecksilber(I)-chlorid; Quecksilber(II)-oxid; Metalaxyl und seine enantiomeren Formen, insbesondere Metalaxyl-m; Metam; Metam-natrium; Metconazol; Methasulfocarb; Methylisothiocyanat; Metiram; Zink-Metiram; Metominostrobin (SSF-126); MON 65500; Myclotbutanil;. Nabam; Naphthensäure; Zinknaphthenat; Natamycin; Nickelbis(dimethyldithiocarbamat); Nitrothal-Isopropyl; Nuarimol; Octhilinon; Ofurace; Ölsäure (Fettsäuren); Oxadixyl; Oxin-Kupfer; Oxycarboxin; Penconazol; Pencycuron; Pentachlorphenol; Pentachlorphenyllaurat; Perfurazoat; 2-Phenylphenol; *Phlebiopsis gigantea*; Phosphorsäure und ihre Derivate wie Fosetyl-Al, Phthalid; Picoxystrobin; Piperalin; Polyoxin B; Polyoxine; Polyoxorim; Probenazol; Prochloraz; Procymidon; Propamocarb; Propamocarb-hydrochlorid; Propiconazol; Propineb; Pyraclostrobin; Pyrazophos; Pyributicarb; Pyrifenox; Pyrimethanil; Pyroquilon; Quinoxyfen; Quintozen; RH-7281; sec.-Butylamin; Natrium-2-phenylphenolat; Natriumpentachlorphenolat; Silthiofam, Simeconazol, Spiroxamin (KWG 4168); *Streptomyces griseoviridis*; Schwefel; Teeröle; Tebuconazol; Tecnazen; Tetraconazol; Thiabendazol; Thifluzamid; Thiophanat wie Thiophanat-methyl; Thiram; Tolclofos-methyl; Tolylfluanid; Triadimefon; Triadimenol; Trifloxystrobin; die Triazolopyrimidine, insbesondere Cloransulammethyl, Flumetsulam, Florasulam, Metosulam, Triazoxid; *Trichoderma harzianum*; Tricyclazol; Tridemorph; Trifloxystrobin; Triflumizol; Triforin; Triticonazol; Validamycin; Valinamidderivate, insbesondere Iprovalicarb und Benthiavalicarb; Vinclozolin; Zineb; Ziram; Zoxamid und ihre Mischungen.

**6.** Zusammensetzung nach einem der Ansprüche 1 bis 5, wobei das Gewichtsverhältnis zwischen der Verbindung (A) und der Verbindung (B)
$0{,}001 \leq A/B \leq 500$, vorzugsweise
$0{,}01 \leq A/B \leq 500$, noch stärker bevorzugt
$0{,}01 \leq A/B \leq 10$ beträgt.

**7.** Verfahren zur kurativen, präventiven oder eradikativen Bekämpfung von pflanzenpathogenen Pilzen an Kulturen, **dadurch gekennzeichnet, daß** man eine wirksame (landwirtschaftlich wirksame), nicht phytotoxische Menge einer fungiziden Zusammensetzung nach einem der Ansprüche 1 bis 6 auf den Boden, auf dem die Pflanzen wachsen oder wachsen können, auf die Blätter und/oder die Früchte der Pflanzen oder die Samen der Pflanzen ausbringt.

**8.** Verfahren nach Anspruch 7 zum Schutz von Getreidekulturen (Weizen, Gerste, Mais, Reis) und Gemüsekulturen (Bohne, Zwiebel, Kürbisgewächse, Kohl, Kartoffel, Tomate, Paprikaschoten, Spinat, Erbsen, Salat, Sellerie, Chicorée), Obstkulturen (Erdbeerpflanzen, Himbeerstauden), Baumkulturen (Apfelbäume, Birnbäume, Kirschbäume, Ginseng, Zitronenbäume, Kokospalmen, Pekannußbäume, Kakaobäume, Nußbäume, Gummibäume, Olivenbäume, Pappeln, Bananenstauden), von Wein, Sonnenblume, Zuckerrübe, Tabak, Zierpflanzen, Luzerne, Soja, Kulturen des Erwerbsgartenbaus, Rasen, Holz oder gartenbaulichen Pflanzen.

**9.** Verfahren nach Anspruch 7 oder 8 zur Bekämpfung von Getreidekrankheiten wie Echtem Mehltau, Septoria und Braunrost.

**10.** Produkt aus mindestens einer fungiziden Verbindung (A) der Formel (I) und einer fungiziden Verbindung (B) nach einem der Ansprüche 1 bis 6 für eine gleichzeitige, getrennte, abwechselnde oder aufeinanderfolgende Behandlung.

## Claims

**1.** Fungicidal composition comprising::

A) at least one arylamidine derivative of formula (I):

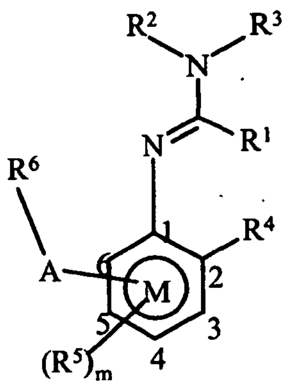

(A)

in which:

- $R^1$ is an alkyl, an alkenyl, an alkynyl, a carbocyclic or heterocyclic monovalent group, it being possible for each of these groups to be substituted, or hydrogen
- $R^2$ and $R^3$, which may be identical or different, are any one of the groups defined for $R^1$; a cyano; an acyl; $-OR^a$ or $-SR^a$, with $R^a$ corresponding to an alkyl, an alkenyl, an alkynyl, a carbocyclic or heterocyclic monovalent group, it being possible for each of these groups to be substituted, or $R^2$ and $R^3$, or $R^2$ and $R^1$ may form together and with the atoms linking them, a ring which may be substituted;
- $R^4$ is an alkyl, an alkenyl, an alkynyl, a carbocyclic or heterocyclic monovalent group, it being possible for each of these groups to be substituted, a hydroxyl group; mercapto; azido; nitro; halo; cyano; optionally substituted acyl, amino; cyanato; thiocyanato; $-SF_5$; $-OR^a$; $-SR^a$ or $-Si(R^a)_3$;
- m = 0 to 3;
- the optional $R^5$ group or the optional $R^5$ groups, which may be mutually identical or different, have the same definition as that given above for $R^4$;
- $R^6$ is optionally substituted with a carbocyclic monovalent group; and
- A is a direct bond, -O-, $-S(O)_n-$, $-NR^9-$, $-CR^7=CR^7-$, -C≡C-, $-A^1-$, $-A^1-A^1$, $-O-(A^1)_k-O-$, $-O-(A^1)_k-$, $-A^3-$, $-A^4-$, $-A^1O-$, $-A^1S(O)_n-$, $-A^2-$, $OA^2-$, $-NR^9A^2-$, $-OA^2-A^1-$, $-OA^2-C(R^7)=C(R^8)-$, $-S(O)_nA^1-$, $-A^1-A^4-$, $-A^1-A^4-C(R^8)=N-N=CR^8-$, $-A^1-A^4-C(R^8)=N-X^2-X^3-$, $-A^1-A^4-A^3-$, $-A^1-A^4-N(R^9)-$, $-A^1-A^4-X-CH_2-$, $-A^1-A^4-A^1-$, $-A^1-A^4-CH_2X-$, $-A^1-A^4-C(R^8)=N-X^2-X^3-X^1-$, $-A^1-X-C(R^8)=N-$, $-A^1-X-C(R^8)=N-N-CR^8-$,$-A^1-X-C(R^8)=N-N(R^9)-$, $-A^1-X-A^--X^1-$, $-A^1-O-A^3-$, $-A^1-O-C(R^7)=C(R^8)-$,$-A^1-O-N(R^9)-A^2-N(R^9)-$, $-A^1-O-N(R^9)-A^2-$, $-A^1-N(R^9)-A^2-N(R^9)-$, $-A^1-N(R^9)-A^2-$, $-A^1-N(R^9)-N=C(R^8)-$, $-A^3-A^1-$, $-A^4-A^3-$, $-A^2-NR^9-$, $-A^1-A^2-X^1-$, $-A^1-A^1-A^2-X^1-$, $-O-A^2-N(R^9)-A^2-$, $-CR^7=CR^7-A^2-X^1-$, $-C≡C-A^2-X^1-$, $-N=C(R^8)-A^2-X^1-$, $-C(R^8)=N-N=C(R^8)-$, $-C(R^8)=N-N(R^9)-$, $-(CH_2)_2-O-N=C(R^8)-$ or $-X-A^2-N(R^9)-$

with

n = 0, 1 or2,

k = 1 to 9,

$A^1 = -CHR^7-$,

$A^2 = -C(=X)-$,

$A^3 = -C(R^8)=N-O-$,

$A^4 = -O-N=C(R^8)-$,

X = O or S,

$X^1$ = O, S, $NR^9$ or a direct bond,

$X^2$ = O, $NR^9$ or a direct bond,

$X^3$ = hydrogen, -C(=O)-, $-SO_2-$ or a direct bond,

$R^7$, which are mutually identical or different, each correspond to an optionally substituted alkyl, to a cycloalkyl or a phenyl, it being possible for each of these groups to be substituted, hydrogen, a halogen, a cyano, or an acyl;

$R^8$, which are mutually identical or different, each correspond to an alkyl, an alkenyl, an alkynyl, an alkoxy, an alkylthio, it being possible for each of these groups to be substituted, a carbocyclic or heterocyclic monovalent group which may be optionally substituted, or hydrogen;

$R^9$, which are mutually identical or different, each correspond to an optionally substituted alkyl, to a monovalent carbocyclic or heterocyclic group which may be optionally substituted, or to an acyl; or two $R^9$ groups

may form together, and with the atoms linking them, a 5-7-membered ring;
the group represented on the right side of the bond A is linked to $R^6$; or -A-$R^6$ and $R^5$ form together with the benzene ring M, a system of optionally substituted condensed rings;
and the optional optical and/or geometric isomers, the tautomers and the addition salts with an acid or a base, which are agriculturally acceptable, of these derivatives of formula (I); and mixtures thereof; and

B) at least one other known fungicidal compound, preferably chosen from the group comprising: triazoles, triazolinones, imidazoles, strobilurins and morpholines, their optional optical and/or geometric isomers, their tautomers and the addition salts with an acid or a base, which are agriculturally acceptable, and mixtures thereof.

**2.** Composition according to Claim 1, such that the compound (A) is the formula (I) in which:

$R^1$ is an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen, or hydrogen;
$R^2$ and $R^3$ which may be identical or different and which have the same definition as that given above for $R^1$ or which correspond to an alkoxy, an alkoxyalkyl, a benzyloxy, a cyano or an alkylcarbonyl;
$R^4$ is an alkyl, an alkenyl or an alkynyl, it being possible for each of these groups to be substituted with alkoxy, a haloalkoxy, an alkylthiol, halogen or a phenyl optionally substituted with an alkyl, with a haloalkyl, with an alkoxy, with a haloalkoxy, with an alkylthiol or with a halogen; a hydroxyl; an halogen; a cyano; an acyl (preferably: $-C(=O)R^c$, $-C(=S)R^c$ or $-S(O)_pR^c$, with $R^c$ corresponding to an alkyl, a haloalkyl, alkoxy, haloalkoxy, alkylthiol, an amine, a monoalkylamine, a dialkylamine or a phenyl optionally substituted with an alkyl, with a haloalkyl, with an alkoxy, with a haloalkoxy, or with an alkylthiol;
m = 0 or 1;
when it is present, $R^5$ is a group having the same definition as that given above for $R^4$,
A is a direct bond, -O-, -S-, $-NR^9-$, $-CHR^7-$ or $-O-CHR^7-$,
with $R^9$, when it is present, corresponding to an alkyl, an alkenyl or an alkynyl, it being possible for each of these groups to be substituted with an alkoxy, a haloalkoxy, an alkylthiol, halogen or a phenyl optionally substituted with an alkyl, with a haloalkyl, with an alkoxy, with a haloalkoxy, with an alkylthiol or with a halogen, or corresponds to hydrogen;
and $R^7$ has the same definition as that given above for $R^9$ or represents a hydroxyl; a halogen; a cyano; an acyl; alkoxy; a haloalkoxy or an alkylthiol;
A is linked to the 4-position of the benzyl ring M; and
$R^6$ is a phenyl or an aromatic heterocycle, optionally substituted with one or more substituents, which may be identical or different, and which may be selected from the following list: hydroxyl; halogen; cyano; acyl (preferably $-C(=O)R^c$, $-C(=S)R^c$ or $-S(O)_pR^c$, with $R^c$ = alkyl, haloalkyl, alkoxy, haloalkoxy, alkylthiol or phenyl optionally substituted with an alkyl, haloalkyl, alkoxy, haloalkoxy or alkylthiol); amine; alkylamine; dialkylamine; alkyl, haloalkyl, $R^aO$-alkyl, acyloxyalkyl, cyanooxyalkyl, alkoxy; haloalkoxy; alkylthiol; cycloalkyl (preferably cyclohexyl or cyclopentyl) optionally substituted with an alkyl, a haloalkyl, an alkoxy, a haloalkoxy or with an alkylthiol; and benzyl optionally substituted with an alkyl, a haloalkyl, an alkoxy, a haloalkoxy or with an alkylthiol.

**3.** Composition according to either of Claims 1 and 2, such that the compound (A) of formula (I) possesses the following characteristics, taken in isolation or combination:

$R^1$ = H
$R^2$ = C1-C6 alkyl, preferably methyl;
$R^3$ = C1-C6 alkyl, preferably ethyl;
$R^4$ = C1-C6 alkyl, preferably methyl;
$R^5$ = C1-C6 alkyl, preferably methyl and $R^5$ is linked to the carbon at C5 of the benzyl ring M, with m =1;
A is linked to the carbon at C4 of the benzyl ring M and represents-O-;
$R^6$ = aryl, preferably benzyl, advantageously substituted with at least one alkyl and/or with at least one halogen.

**4.** Composition according to any one of Claims 1 to 3, such that the compound (A) is -*N*- ethyl-*N*-methyl-*N'*-[4-(chloro-3-trifluoromethylphenoxy)-2,5-xylyl]-formamidine or and *N*-ethyl-*N*-methyl-*N'*-[4-(fluoro-3-trifluoromethylphenoxy)-2,5-xylyl]-formamidine and the possible tautomers and addition salts with an acid or a base, which are agriculturally acceptable.

**5.** Composition according to any one of Claims 1 to 4, such that the compound (B) is selected from phenylmercuric

acetate; *Ampelomyces quisqualis*; ac 382042; azaconazole; azoxystrobin; acibenzolar-s-methyl, *Bacillus subtilis*; benalaxyl; benomyl; biphenyl; bitertanol; blasticidin-s; Bordeaux mixture; borax; bromuconazole; bupirimate; calboxin; calcium polysulphide; captafol; captan; carbendazim; carboxin, carpropamid (ktu 3616); cga 279202; chinomethionat; chlorothalonil; chlozolinate; fungicidal compositions based on copper or copper derivatives such as copper hydroxide; copper naphthenate; copper oxychloride; copper sulphate; copper oxide; cymoxanil; cyproconazole; cyprodinil; cyazofamid, dazomet; debacarb; dichlofluanid; dichlomezine; dichlorophen; diclocymet; dicloran; diethofencarb; difenoconazole; difenzoquat; difenzoquat metilsulphate; diflumetorim; dimethirimol; dimethomorph; dimoxystrobin, diniconazole; diniconazole-m; dinobuton; dinocap; diphenylamine; discostrobin, dithianon; dodemorph; dodemorph acetate; dodine; dodine free base; edifenphos; epoxiconazole (bas 480f); ethaboxam; ethasulfocarb; ethirimol; etridiazole; famoxadone; fenamidone; fenarimol; fenbuconazole; fenfin; fenfuram; fenhexamid; fenpiclonil; fenpropidin; fenpropimorph; fentin acetate; fentin hydroxide; ferbam; ferimzone; fluazinam; fludioxonil; fluoroimide; fluquinconazole; flusilazole; flusulfamide; flutolanil; flumetover, flutriafol; folpet; formaldehyde; fosetyl; fosetyl-aluminium; fuberidazole; furalaxyl; *Fusarium oxysporum*; furametpyr; 8-hydroxyquinoline sulphate; *Gliocladium virens*; guazatine; guazatine acetate; gy-81; hexachlorobenzene; hexaconazole; hymexazol; potassium hydroxyquinoline sulphate; icia 0858; ikf-916; imazalil; imazalil sulphate; imibenconazole; iprobenphos; iminoctadine; iminoctadine triacetate; iminoctadine tris[albesilate]; ipconazole; iprobenfos; iprodione; iprovalicarb; isoprothiolane; kasugamycin; kasugamycin hydrochloride hydrate; kresoxim-methyl; mancopper; mancozeb; maneb; mefenoxame; mepanipyrim; mepronil; mercury(II) chloride; mercury(II) oxide; mercury(I) chloride; metalaxyl and its enantiomers, in particular metalaxyl-m; metam; metam-sodium; metconazole; methasulfocarb; methyl isothiocyanate; metiram; metiram-zinc; metominostrobin (ssf-126); mon65500; myclotbutanil; nabam; naphthenic acid; zinc naphthenate; natamycin; nickel bis(dimethyldithiocarbamate); nitrothal-isopropyl; nuarimol; octhilinone; ofurace; oleic acid (fatty acids); oxadixyl; oxine-copper; oxycarboxin; penconazole; pencycuron; pentachlorophenol; pentachlorophenyl laurate; perfurazoate; 2-phenylphenol; *Phlebiopsis gigantea*; phosphoric acid and its derivatives such as fosetyl-al, phthalide; picoxystrobin; piperalin; polyoxine b; polyoxines; polyoxorim; probenazole; prochloraz; procymidone; propamocarb; propamocarb hydrochloride; propiconazole; propineb; pyraclostrobin; pyrazophos; pyributicarb; pyrifenox; pyrimethanil; pyroquilon; quinoxyfen; quintozene; rh-7281; sec-butylamine; sodium 2-phenylphenoxide; sodium pentachlorophenoxide; silthiofam, simeconazole, spiroxamine (kwg 4168); *Streptomyces griseoviridis*; sulphur; tar oils; tebuconazole; tecnazene; tetraconazole; thiabendazole; thifluzamide; thiophanate such as thiophanate-methyl; thiram; tolclofos-methyl; tolylfluanid; triadimefon; triadimenol; trifloxystrobin; triazolopyrimidines, in particular methyl cloransulam, flumetsulam, florasulam, metosulam, triazoxide; *Trichoderma harzianum*; tricyclazole; tridemorph; trifloxystrobin; triflumizole; triforine; triticonazole; validamycin; valinamide derivatives, in particular iprovalicarb and benthiavalicarb; vinclozolin; zineb; ziram; zenoxamide and mixtures thereof.

**6.** Composition according to any one of Claims 1 to 5, such that the the mass ratio between the compound (A) and the compound (B) is such that
$0.001 \leq A/B \leq 500$, preferably such that
$0.01 \leq A/B \leq 500$, and still more preferably
$0.01 \leq A/B \leq 10$.

**7.** Method for controlling, by way of curing, preventing or eradicating, the phytopathogenic fungi of crops, **characterized in that** an effective (agronomically effective) and nonphytotoxic quantity of a fungicidal composition according to any one of Claims 1 to 6 is applied to the soil where plants grow or are capable of growing, to the leaves and/or the fruits of plants or to the seeds of plants.

**8.** Method according to Claim 7 for protecting cereal crops (wheat, barley, maize, rice) and vegetable crops (haricot bean, onion, cucurbitaceae, cabbage, potato, tomato, sweet pepper, cabbage, pea, lettuce, celery, chicory), fruit crops (strawberry plants, raspberry plants), tree crops (apple trees, pear trees, cherry trees, ginseng, lemon trees, coconut palms, pecan trees, cacao trees, walnut trees, rubber trees, olive trees, poplars, banana trees), grapevine, sunflower, beetroot, tobacco and ornamental crops, luceme, soyabean, market garden crops, turf, wood or horticultural plants.

**9.** Method according to either of Claims 7 and 8 for controlling cereal diseases such as powdery mildew, Septoria disease and brown rust.

**10.** Product for the simultaneous, separate, alternate or sequential application of at least one fungicidal compound (A) of formula (I) and a fungicidal compound (B) according to any one of Claims 1 to 6.